# EUROPEAN PATENT APPLICATION

(11) **EP 4 753 158 A1**
(43) Date of publication of application: **03.06.2026**
(21) Application number: 24865776.9
(22) Date of filing: 06.09.2024
(51) Int. Cl.: H04B 1/401, H04B 1/50, H04B 7/06, H04B 7/08, H04M 1/02, H01Q 1/24, H04W 88/06

(54) **ELECTRONIC DEVICE AND METHOD FOR CONTROLLING TRANSMISSION/RECEPTION PATH OF RADIO SIGNALS**

(30) Priority: 13.09.2023 KR 20230121970; 03.11.2023 KR 20230150967
(71) Applicant: Samsung Electronics Co., Ltd., Suwon-si, Gyeonggi-do 16677 (KR)
(72) Inventor: CHA, Jaemoon, Suwon-si, Gyeonggi-do 16677 (KR); JUNG, Euichang, Suwon-si, Gyeonggi-do 16677 (KR); LEE, Seongju, Suwon-si, Gyeonggi-do 16677 (KR); YUN, Seoksun, Suwon-si, Gyeonggi-do 16677 (KR)
(74) Representative: Nederlandsch Octrooibureau
(86) International application number: PCT/KR2024/013512
(87) International publication number: WO 2025/058336

(57) **Abstract**

An electronic device according to various embodiments of the present document may comprise: a first housing; a second housing rotatably connected to the first housing through a hinge structure; a display including a first area disposed on the first housing and a second area disposed in the second housing, the display being foldable with respect to the boundary area between the first area and the second area in response to a change in angle between the first housing and the second housing; a first communication module for processing transmission/reception of a first signal of a first wireless communication type; a second communication module for processing transmission/reception of a second signal of a second wireless communication type different from the first wireless communication type; multiple antennas for transmitting and/or receiving the first signal and/or the second signal; a memory; and at least one processor disposed in the first housing or the second housing and operatively connected to the display, the first communication module, the second communication module, the antennas, and the memory.

## Description

### [Technical Field]

The present disclosure relates to an electronic device, and, for example, relates to an electronic device capable of transmitting and receiving a wireless signal of a radio frequency (RF) band.

### [Background Art]

A portable electronic device (hereinafter, an electronic device) may provide various user experiences through an application. As performance of the electronic device is improved, and an application and a function provided become diverse, the electronic device may support various wireless communication type such as a cellular wireless communication (e.g., 4G LTE, 5G NR) in addition to a wireless local area network (WLAN) (or Wi-Fi), a bluetooth^{™}, a ultra-wideband (UWB), and a near field communication (NFC). Each wireless communication type supported in the electronic device is standardized to transmit and receive a wireless signal in a determined frequency band, and the electronic device may include a plurality of antennas for transmitting and receiving each wireless communication signal. Each antenna may be designed to be capable of transmitting and receiving a signal of a predetermined range of frequency band, and the electronic device may use at least one antenna respectively in order to transmit and receive a signal of a specific wireless communication type. Some among wireless communication type supported in the electronic device may use an identical or adjacent frequency band. For example, an uplink and a downlink band of some frequency band of the cellular wireless communication (e.g., LTE B40 or NR n40) are defined at 2300 to 2400 MHz, and some frequency band of a WWAN (wireless wide area network) communication (e.g., Wi-Fi 2.4GHz) may include a plurality of channels between 2400 and 2483 MHz.

Meanwhile, recently, in order to satisfy efficiency in a space, an electronic device having a display of various form factor in which a size of a display area of a display becomes variable is being developed. For example, the electronic device may have a display mounted including a foldable display of a folding type or a rollable display (or a slidable display) of a type in which a wound display expands to the outside.

### [Disclosure of Invention]

### [Technical Problem]

In a case in which different wireless signal using frequency bands adjacent to each other in the electronic device are transmitted and received, an influence on an RF path between each other may be exerted. For example, when the cellular wireless communication and a short-range wireless communication (e.g., WLAN, Bluetooth, UWB, Zigbee) operate simultaneously, due to a Tx and Rx signals, an nth harmonic component, a Tx frequency difference, and the like of frequency bands adjacent to each other, a cause of performance degradation with respect to a reception path of another wireless communication type may be provided. Such performance degradation may become greater as a distance of an antenna transmitting and receiving a signal of another wireless communication type becomes closer.

In a case of the electronic device of a form factor in which a size of a display area is changed, such as a foldable type or a rollable type, a distance between each antenna may become different according to a state change of the display.

### [Solution to Problem]

An electronic device according to the present disclosure (or specification, invention) may comprise: a first housing; a second housing rotatably connected to the first housing through a hinge structure; a first area disposed on the first housing and a second area disposed in the second area; a display foldable based on a boundary area between the first area and the second area as an angle between the first housing and the second housing changes; a first communication module configured to process transmission and reception of a first signal of a first wireless communication type; a second communication module configured to process transmission and reception of a second signal of a second wireless communication type different from the first wireless communication type; a plurality of antennas for transmitting and/or receiving the first signal and/or the second signal; a memory; and at least one processor disposed in the first housing or the second housing and operatively connected with the display, the first communication module, the second communication module, the antennas, and the memory.

According to one embodiment, the plurality of antennas may comprise at least one antenna disposed on the first housing, and at least one antenna disposed on the second housing, and a distance between the at least one antenna disposed on the first housing and the at least one antenna disposed on the second housing may be changed according to the angle between the first housing and the second housing.

According to one embodiment, the memory may store instructions executable by at least one processor, and, when executed, cause the electronic device to identify transmission of the first signal of a first frequency band through the first communication module, identify reception of the second signal of a second frequency band at least partially overlapping the first frequency band through the second communication module at least partially simultaneously with the transmission of the first signal, determine a state of the electronic device based on the angle between the first housing and the second housing, and determine, based on the determined state of the electronic device, at least one antenna to be used for transmitting the first signal and at least one antenna to be used for receiving the second signal.

A method of controlling a transmission and reception path of a wireless signal of an electronic device according to various embodiments of the present document may comprise: identifying transmission of a first signal of a first frequency band; identifying reception of the second signal of a second frequency band at least partially overlapping the first frequency band at least partially simultaneously with the transmission of the first signal; determining a state of the electronic device based on an angle between a first housing and a second housing of the electronic device; and determining, based on the determined state of the electronic device, at least one antenna to be used for transmitting the first signal and at least one antenna to be used for receiving the second signal.

### [Advantageous Effects of Invention]

According to various embodiments of the present document, in a co-existence situation of the WWAN and the WLAN, an electronic device and a method of controlling a transmission and reception path of a wireless signal of the electronic device may be provided, capable of improving reception performance of a signal by performing an operation for reducing an influence on a reception path including an antenna according to a state of the electronic device.

### [Brief Description of Drawings]

FIG. 1 is a block diagram illustrating an electronic device in a network environment according to various embodiments.
FIGS. 2A, 2B, 2C, 2D, and 2E illustrate a foldable type electronic device foldable left and right about a folding axis of a vertical direction according to one embodiment.
FIGS. 3A, 3B, 3C, 3D, and 3E illustrate a foldable type electronic device foldable up and down about a folding axis of a horizontal direction according to one embodiment.
FIGS. 4A, 4B, 4C, and 4D illustrate a slidable type electronic device capable of being expanded in a horizontal direction according to one embodiment.
FIG. 5A and FIG. 5B illustrate a slidable type electronic device capable of being expanded in a vertical direction according to one embodiment.
FIG. 6 illustrates antennas disposed in a foldable type electronic device foldable up and down according to one embodiment.
FIG. 7 illustrates antennas disposed in a foldable type electronic device foldable left and right according to one embodiment.
FIG. 8 illustrates antennas disposed in a slidable type electronic device capable of being expanded in a vertical direction according to one embodiment.
FIG. 9 is a block diagram of an electronic device according to one embodiment.
FIG. 10 is a block diagram of the electronic device according to one embodiment.
FIG. 11 is a flowchart of a method of controlling a transmission and reception path of a wireless signal of an electronic device according to one embodiment.
FIG. 12 is a flowchart of the method of controlling the transmission and reception path of the wireless signal of the electronic device according to one embodiment.
FIG. 13A is a flowchart of a method of blocking a part among a Tx path of a first signal when an electronic device is unfolded according to one embodiment.
FIG. 13B is a flowchart of a method of dividing a time domain and transmitting the first signal and receiving a second signal when the electronic device is folded according to one embodiment.
FIG. 14 is a flowchart of a method of blocking a part among an Rx path of the second signal when an electronic device is unfolded according to one embodiment.
FIG. 15A and FIG. 15B are a flowchart of a method of preferentially transmitting and receiving a WLAN signal when an electronic device is in an unfolded state and is simultaneously connected to a WWAN and a WLAN according to one embodiment.
FIG. 16 is a flowchart of a method of changing a frequency of the WLAN when the electronic device is in a simultaneously connected state of the WWAN and the WLAN according to one embodiment.
FIG. 17 is a flowchart of a method of changing a frequency of the WLAN when the electronic device is in a simultaneously connected state of the WWAN and the WLAN according to one embodiment.
FIG. 18 is a flowchart of a method of preferentially transmitting and receiving the WLAN signal in a VoWiFi call when the electronic device is in the simultaneously connected state of the WWAN and the WLAN according to one embodiment.

### [Mode for the Invention]

Hereinafter, embodiments of the present disclosure will be described in detail with reference to the accompanying drawings so that those with ordinary skill in the art to which the present disclosure pertains may easily carry out the embodiments. However, the present disclosure may be implemented in various different ways and is not limited to the embodiments described herein. In connection with the description of the drawings, the similar or same reference numerals may be used for the similar or same constituent elements (i.e., components, parts). In addition, in the drawings and related descriptions, the description of well-known features and configurations may be omitted for clarity and conciseness.

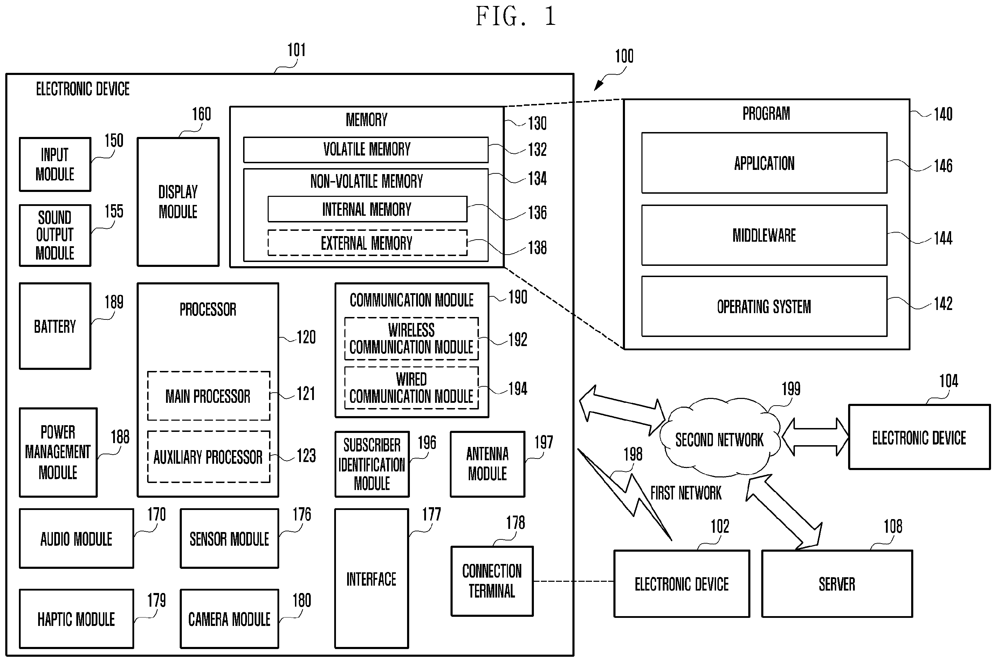

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

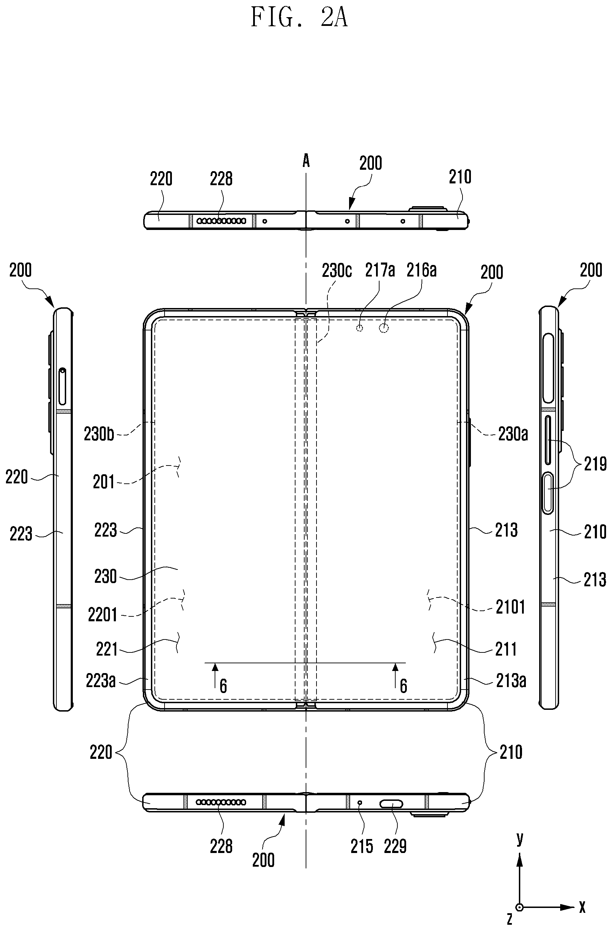

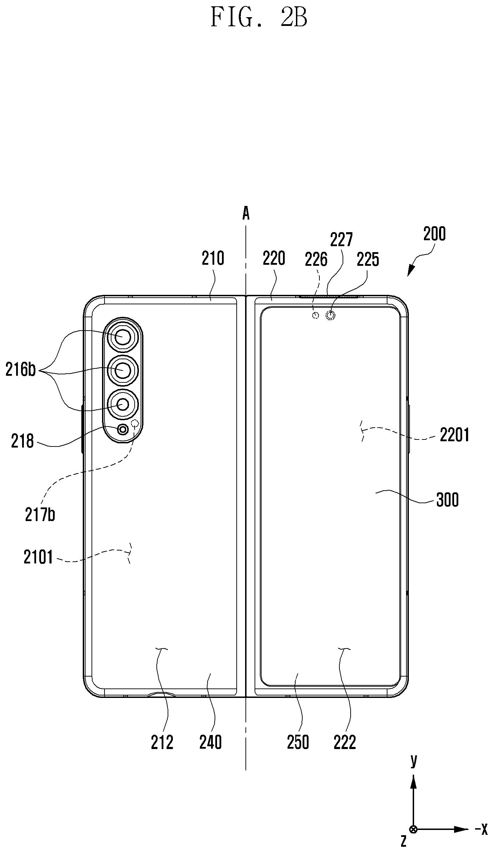

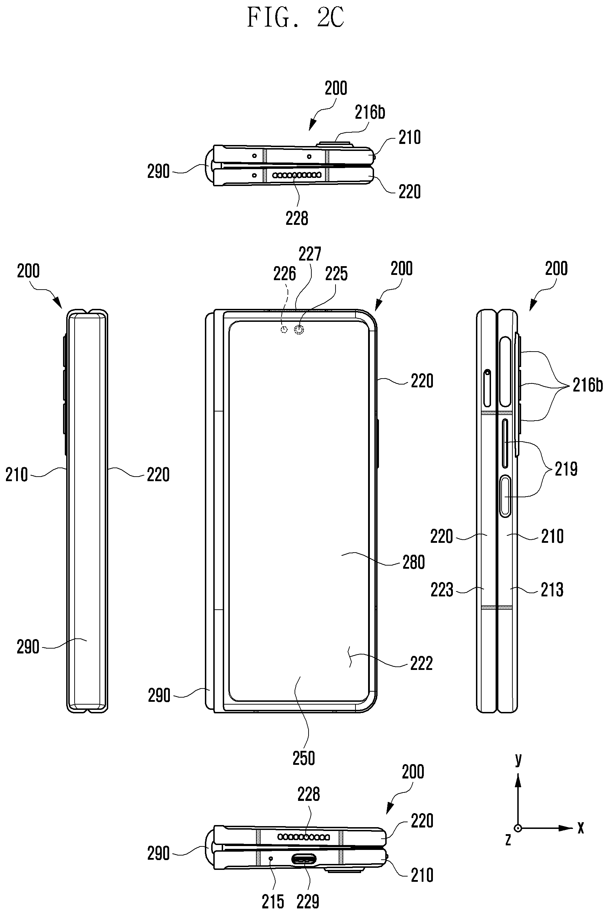

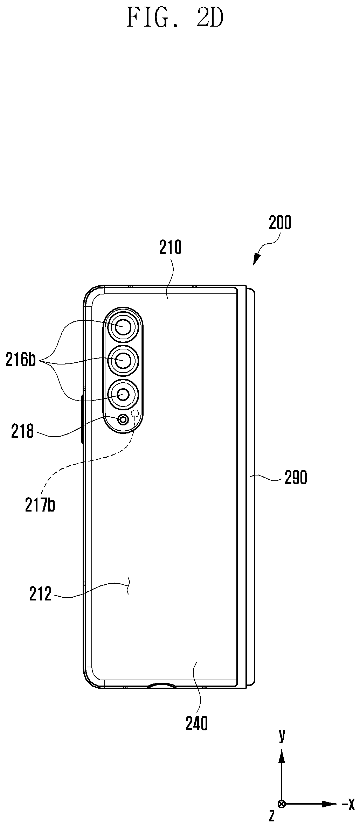

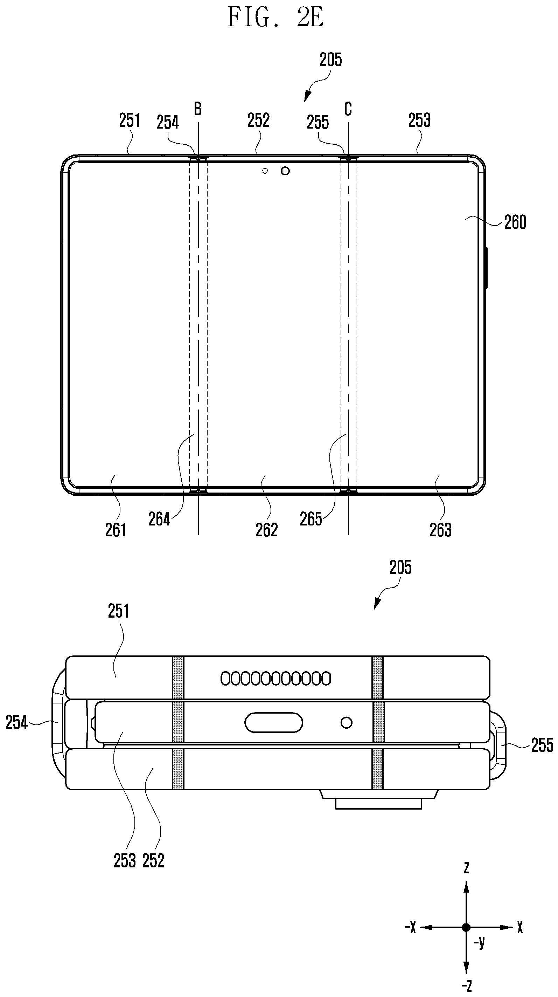

FIGS. 2A, 2B, 2C, 2D, and 2E illustrate an electronic device foldable left and right according to one embodiment.

FIG. 2A and FIG. 2B are drawings viewing an unfolding state (or unfolded state) of the electronic device from a front side and a rear side, and FIG. 2C and FIG. 2D are drawings viewing a folding state (or folded state) of the electronic device according to one embodiment of the present disclosure from the front side and the rear side. According to one embodiment, the electronic device 200 may include a foldable structure folded left and right about a folding axis A of a vertical direction.

With reference to FIG. 2A to FIG. 2D, the electronic device 200 may include a pair of housings 210 and 220 (or a foldable housing structure) rotatably coupled about the folding axis A through a hinge device to be foldable with respect to each other, a first display 230 (or a flexible display, a foldable display, or a main display) disposed through the pair of housings 210 and 220, and/or a second display 280 (or a sub display) disposed through a second housing 220. According to one embodiment, at least a part of the hinge device may be disposed to be not visible from the outside through a first housing 210 and the second housing 220, and, in an unfolded state, may be disposed to be not visible from the outside through a hinge housing 290 covering a foldable part.

According to one embodiment, the hinge device may include a gear assembly including a plurality of gears and hinge shafts coupled to rotate through the gear assembly, and may include a hinge module including a plurality of hinge cams performing a cam interlocking operation, and hinge plates connecting the hinge module and the first housing 210 and the second housing 220. In the present document, a surface on which the first display 230 is disposed may be defined as a front surface of the electronic device 200, and a surface opposite to the front surface may be defined as a rear surface of the electronic device 200. In addition, a surface surrounding a space between the front surface and the rear surface may be defined as a side surface of the electronic device 200.

According to one embodiment, the pair of housings 210 and 220 may include the first housing 210 and the second housing 220 disposed to be foldable with respect to each other through the hinge device. According to one embodiment, the pair of housings 210 and 220 are not limited to a form and coupling illustrated in FIG. 2A to FIG. 2D, and may also be implemented by a combination and/or coupling of another shape or component (i.e., part). According to one embodiment, the first housing 210 and the second housing 220 are disposed on opposite sides of the folding axis A, and may have a shape symmetric as a whole with respect to the folding axis A. According to some embodiment, the first housing 210 and the second housing 220 may also be folded asymmetrically about the folding axis A. According to one embodiment, the first housing 210 and the second housing 220 may have different angles or distances relative to each other according to whether the electronic device 200 is in an unfolded state, a folded state, or an intermediate state.

According to one embodiment, the first housing 210, in the unfolded state of the electronic device 200, may include a first surface 211 disposed to be connected to the hinge device and to face the front surface of the electronic device 200, a second surface 212 facing a direction opposite to the first surface 211, and/or a first lateral member 213 surrounding at least a part of a first space 2101 between the first surface 211 and the second surface 212. According to one embodiment, the second housing 220, in the unfolded state of the electronic device 200, may include a third surface 221 disposed to be connected to the hinge device and to face the front surface of the electronic device 200, a fourth surface 222 facing a direction opposite to the third surface 221, and/or a second lateral member 223 surrounding at least a part of a second space 2201 between the third surface 221 and the fourth surface 222. According to one embodiment, the first surface 211, in the unfolded state, faces a substantially same direction as the third surface 221, and, in the folded state, may be at least partially faced to face the third surface 221. According to one embodiment, the electronic device 200 may also include a recess 201 formed to accommodate the first display 230 through structural coupling of the first housing 210 and the second housing 220. According to one embodiment, the recess 201 may have a size substantially same as the first display 230. According to one embodiment, the first housing 210, when viewing the first display 230 from above, may include a first protective frame 213a coupled with the first lateral member 213 and disposed to overlap with an edge of the first display 230, thereby covering to make an edge of the first display 230 not visible from the outside. According to one embodiment, the first protective frame 213a may also be formed integrally with the first lateral member 213. According to one embodiment, the second housing 220, when viewing the first display 230 from above, may include a second protective frame 223a (or a second decoration member) coupled with the second lateral member 223 and disposed to overlap with the edge of the first display 230, thereby covering to make the edge of the first display 230 not visible from the outside. According to one embodiment, the second protective frame 223a may also be formed integrally with the second lateral member 223. In some embodiment, the first protective frame 213a and the second protective frame 223a may also be omitted.

According to one embodiment, the hinge housing 290 (or a hinge cover) may be disposed between the first housing 210 and the second housing 220, and may be disposed to cover a part of the hinge device disposed in the hinge housing 290. According to one embodiment, the hinge housing 290, according to an unfolded state, a folded state, or an intermediate state of the electronic device 200, may be covered by a part of the first housing 210 and the second housing 220, or may be exposed to the outside. For example, when the electronic device 200 is in the unfolded state, at least a part of the hinge housing 290 may be covered by the first housing 210 and the second housing 220 and may not be substantially exposed. According to one embodiment, when the electronic device 200 is in the folded state, at least a part of the hinge housing 290 may be exposed to the outside between the first housing 210 and the second housing 220. According to one embodiment, when the first housing 210 and the second housing 220 are in the intermediate state forming a predetermined angle (folded with a certain angle), the hinge housing 290 may be at least partially exposed to the outside of the electronic device 200 between the first housing 210 and the second housing 220. For example, an area in which the hinge housing 290 is exposed to the outside may be less than a fully folded state. According to one embodiment, the hinge housing 290 may include a curved surface.

According to one embodiment, when the electronic device 200 is in the unfolded state (e.g., a state of FIG. 2A and FIG. 2B), the first housing 210 and the second housing 220 form an angle of about 180 degrees, and a first area 230a, a second area 230b, and a folding area 230c of the first display 230 form a substantially same plane, and may be disposed to face a substantially same direction (e.g., a z-axis direction). As another embodiment, when the electronic device 200 is in the unfolded state, the first housing 210 may also be rotated with respect to the second housing 220 at an angle of about 360 degrees so that the second surface 212 and the fourth surface 222 face each other and may also be folded oppositely (out folding method).

According to one embodiment, when the electronic device 200 is in the folded state (e.g., a state of FIG. 2C and FIG. 2D), the first surface 211 of the first housing 210 and the third surface 221 of the second housing 220 may be disposed to face each other. In such case, the first area 230a and the second area 230b of the first display 230, through the folding area 230c, form a narrow angle (e.g., a range of 0 degree to about 10 degree), and may also be disposed to face each other. According to one embodiment, the folding area 230c may be deformed into a curved shape having at least a part having a predetermined curvature. According to one embodiment, when the electronic device 200 is in the intermediate state, the first housing 210 and the second housing 220 may be disposed at a predetermined angle (a certain angle) with respect to each other. In such case, the first area 230a and the second area 230b of the first display 230 may form an angle greater than the folded state and smaller than the unfolded state, and a curvature of the folding area 230c may be smaller than in a case of the folded state, and may be greater than the unfolded state. In some embodiment, the first housing 210 and the second housing 220, through the hinge device, may form an angle capable of stopping at a designated folding angle between the folded state and the unfolded state (free stop function). In some embodiment, the first housing 210 and the second housing 220, through the hinge device, based on a designated inflection angle, may also be continuously operated, while being pressurized, in an unfolding direction or a folding direction.

According to one embodiment, the electronic device 200 may include at least one of at least one display 230 and/or 280 disposed in the first housing 210 and/or the second housing 220, an input device 215, a sound output device 227 or 228, a sensor module 217a, 217b, or 226, a camera module 216a, 216b, or 225, a key input device 219, an indicator (not illustrated), or a connector port 229. In some embodiment, the electronic device 200 may omit at least one among constituent elements or may additionally include at least one other constituent element.

According to one embodiment, at least one display 230 and/or 280 may include the first display 230 disposed to be supported by the third surface 221 of the second housing 220 from the first surface 211 of the first housing 210 through the hinge device, and the second display 280 disposed to be at least partially visible from the outside through the fourth surface 222 in an inner space of the second housing 220. In some embodiment, the second display 280 may also be disposed to be visible from the outside through the second surface 212 in an inner space of the first housing 210. According to one embodiment, the first display 230 may be mainly used in the unfolded state of the electronic device 200, and the second display 280 may be mainly used in the folded state of the electronic device 200. According to one embodiment, the electronic device 200, in a case of the intermediate state, may control to make the first display 230 and/or the second display 280 usable based on a folding angle of the first housing 210 and the second housing 220.

According to one embodiment, the first display 230 may be disposed in an accommodation space formed by the pair of housings 210 and 220. For example, the first display 200 may be disposed in the recess 201 formed by the pair of housings 210 and 220, and, in the unfolded state, may be disposed to occupy substantially most of the front surface of the electronic device 200. According to one embodiment, the first display 230 may include a flexible display capable of deforming at least a partial area into a flat surface or a curved surface. According to one embodiment, the first display 230 may include the first area 230a facing the first housing 210 and the second area 230b facing the second housing 220. According to one embodiment, the first display 230, about the folding axis A, may include the folding area 230c including a part of the first area 230a and a part of the second area 230b. According to one embodiment, at least a part of the folding area 230c may include an area corresponding to the hinge device. According to one embodiment, an area division of the first display 230 is only an exemplary physical division by the pair of housings 210 and 220 and the hinge device, and substantially, through the pair of housings 210 and 220 and the hinge device, the first display 230 may be displayed as a seamless, one entire screen. According to one embodiment, the first area 230a and the second area 230b may have a shape symmetric as a whole about the folding area 230c, or may have a partially asymmetric shape.

According to one embodiment, the electronic device 200 may include a first rear surface cover 240 disposed in the second surface 212 of the first housing 210 and a second rear surface cover 250 disposed in the fourth surface 222 of the second housing 220. In some embodiment, at least a part of the first rear surface cover 240 may also be formed integrally with the first lateral member 213. In some embodiment, at least a part of the second rear surface cover 250 may also be formed integrally with the second lateral member 223. According to one embodiment, at least one cover among the first rear surface cover 240 and the second rear surface cover 250 may be formed of a substantially transparent plate (e.g., a glass plate including various coating layers, or a polymer plate) or an opaque plate. According to one embodiment, the first rear surface cover 240, for example, may be formed by an opaque plate such as coated or colored glass, ceramic, polymer, metal (e.g., aluminum, stainless steel (STS), or magnesium), or a combination of at least two among the materials. According to one embodiment, the second rear surface cover 250, for example, may be formed through a substantially transparent plate such as glass or polymer. Accordingly, the second display 280, in an inner space of the second housing 220, may be disposed to be visible from the outside through the second rear surface cover 250.

According to one embodiment, the input device 215 may include a microphone. In some embodiment, the input device 215 may include a plurality of microphones disposed to be capable of sensing a direction of a sound. According to one embodiment, the sound output device 227 or 228 may include speakers. According to one embodiment, the input device 215, the sound output device 227 or 228, and a connector 229 may be disposed in spaces of the first housing 210 and/or the second housing 220, and may be exposed to an external environment through at least one hole formed in the first housing 210 and/or the second housing 220. According to one embodiment, the sound output device 227 or 228 may also include a speaker (e.g., a piezo speaker) operated while a hole formed in the first housing 210 and/or the second housing 220 is excluded.

According to one embodiment, the camera modules 216a, 216b, and 225 may include a first camera module 216a disposed in the first surface 211 of the first housing 210, a second camera module 216b disposed in the second surface 212 of the first housing 210, and/or a third camera module 225 disposed in the fourth surface 222 of the second housing 220. According to one embodiment, the electronic device 200 may include a flash 218 disposed near the second camera module 216b.

According to one embodiment, the sensor module 217a, 217b, or 226 may generate an electrical signal or a data value corresponding to an operating state of an inside of the electronic device 200, or an environmental state of the outside. According to one embodiment, the sensor modules 217a, 217b, and 226 may include a first sensor module 217a disposed in the first surface 211 of the first housing 210, a second sensor module 217b disposed in the second surface 212 of the first housing 210, and/or a third sensor module 226 disposed in the fourth surface 222 of the second housing 220. According to one embodiment, the sensor module 217a, 217b, or 226 may include at least one of a gesture sensor, a grip sensor, a color sensor, an infrared (IR) sensor, an illuminance sensor, an ultrasonic sensor, an iris recognition sensor, or a distance detection sensor (e.g., a TOF (time of flight) sensor or a light detection and ranging (LiDAR) sensor).

According to one embodiment, the key input device 219 may be disposed to be exposed to the outside through the first lateral member 213. For example, the key input device 219 may also be disposed to be exposed to the outside through the second lateral member 223 of the second housing 220.

According to one embodiment, the connector port 229 may include a connector (e.g., a USB connector or an IF module (interface connector port module)) for transmitting and receiving power and/or data with an external electronic device.

According to one embodiment, at least one camera module 216a and/or 225 among the camera modules 216a, 216b, and 225, at least one sensor module 217a and/or 226 among the sensor modules 217a, 217b, and 226, and/or the indicator may be disposed to be exposed through at least one display 230 and/or 280. For example, at least one camera module 216a and/or 225, at least one sensor module 217a and/or 226, and/or the indicator, in an inner space of at least one housing 210 and/or 220, may be disposed below an activated area (display area) of at least one display 230 and/or 280, and may be disposed to contact an external environment through an opening or a transparent area drilled up to a cover member (e.g., a window layer (not illustrated) of the first display 230 and/or the second rear surface cover 250). According to one embodiment, an area in which at least one display 230 and/or 280 and at least one camera module 216a and/or 225 face each other may be formed as a transmissive area having a predetermined transmittance as a part of an area displaying content. According to one embodiment, the transmissive area may be formed to have a transmittance in a range of about 5% to about 20%. Such the transmissive area may include an area overlapping with an effective area (e.g., a view angle area) of at least one camera module 216a and/or 225 through which light for generating an image by being formed on an image sensor passes. For example, the transmissive area of the display 230 and 280 may include an area having a pixel density lower than a periphery. For example, the transmissive area may replace an opening. For example, the at least one camera module 216a and/or 225 may include an under display camera (UDC) or an under panel camera (UPC). As another embodiment, some camera modules or some sensor modules217a and 226 may also be disposed to perform a function without being visually exposed through the display. For example, an area facing the camera module 216a or 225 and/or the sensor module 217a or 226 disposed below the display 230 or 280 (e.g., a display panel), as a UDC (under display camera) structure, may also be unnecessary of a drilled opening.

FIG. 2E illustrates an electronic device having a plurality of folding areas according to various embodiments.

Hereinafter, with respect to a configuration corresponding to what is described through FIG. 2A to FIG. 2D, the description is decided to be omitted.

With reference to FIG. 2E, a flexible display 260 is included, and the flexible display 260 may be disposed across a first housing 251, a second housing 252, and a third housing 253 sequentially disposed.

According to one embodiment, the first housing 251 and the second housing 252 may be foldable or unfoldable with respect to each other through a first hinge member 254. For example, the first housing 251 and the second housing 252 may be rotatably coupled about a folding axis B by using the first hinge member 254. The second housing 252 and the third housing 253 may be foldable or unfoldable with respect to each other through a second hinge member 255. For example, the second housing 252 and the third housing 253 may be rotatably coupled about a folding axis C by using the second hinge member 255.

According to one embodiment, a first folding area 264 may be formed between the first housing 251 and the second housing 252. The first folding area 264 may be formed as a lattice structure including a plurality of openings. The first folding area 264 may provide elasticity by expanding or contracting a size of an opening when the first housing 251 and the second housing 252 are folding or unfolding.

According to one embodiment, a second folding area 265 may be formed between the second housing 252 and the third housing 253. The second folding area 265 may be formed as a lattice structure including a plurality of openings. The second folding area 265 may provide elasticity by expanding or contracting a size of an opening when the second housing 252 and the third housing 253 are folding or unfolding.

According to one embodiment, the electronic device 205, through the second hinge member 255 between the second housing 252 and the third housing 253, may be completely folded in an order in which the third housing 253 is first folded with respect to the second housing 252, and the first housing 251 is folded with respect to the second housing 252 and the third housing 253 folded through the first hinge member 254 between the first housing 251 and the second housing 252. To this end, a width of the first folding area 264 may be wider than a width of the second folding area 265. For example, primarily, through the second hinge member 255, a third display area 263 and a second display area 262 of the flexible display 260 may be folded to face each other, and secondarily, a first display area 261 of the flexible display 260 and a rear surface of the third housing 253 may be folded to face each other.

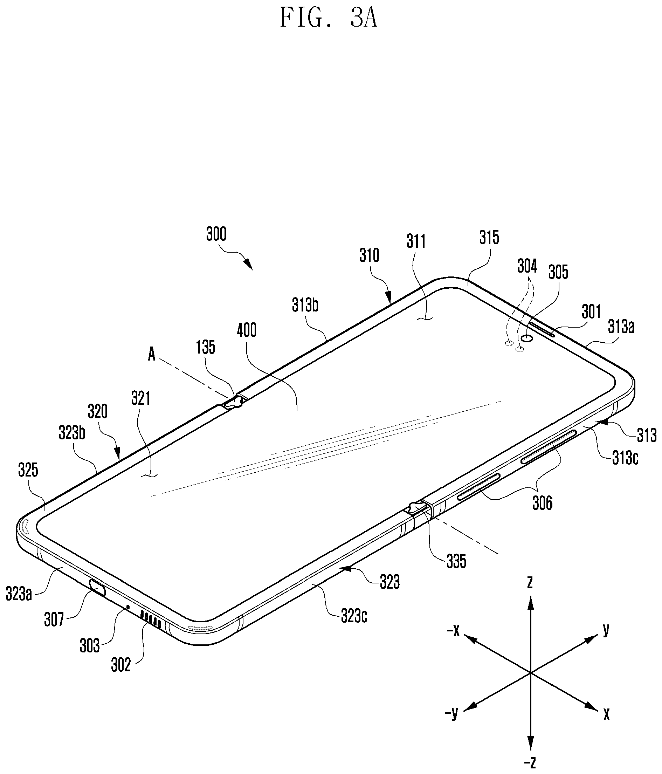

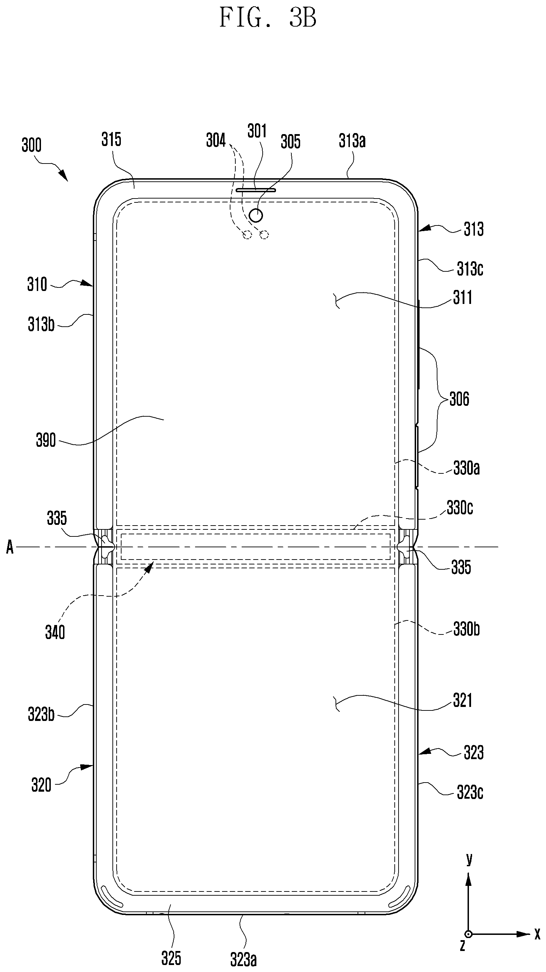

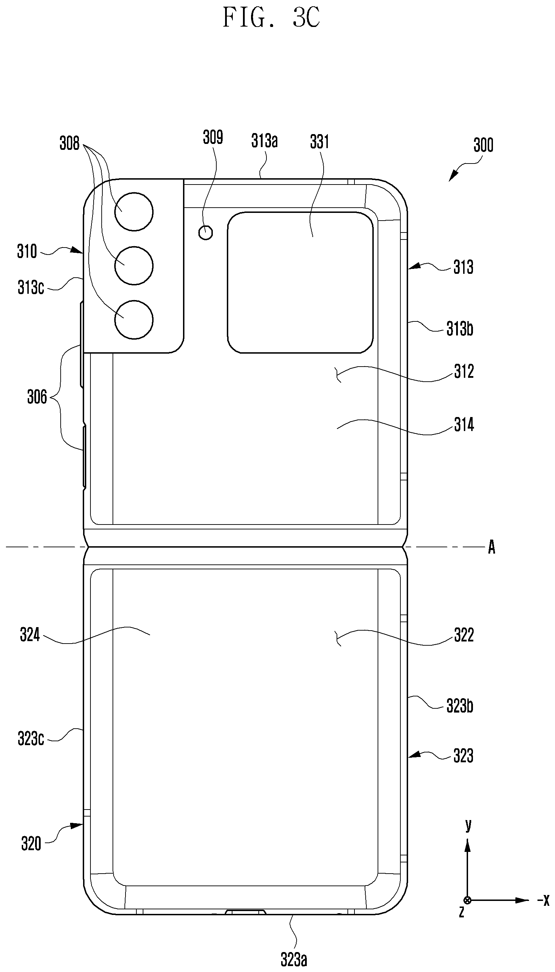

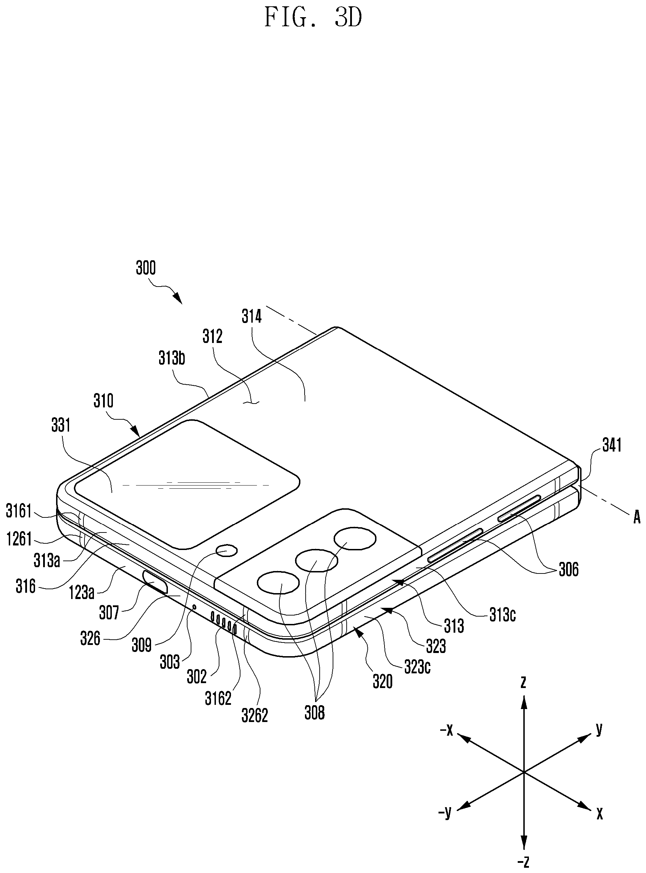

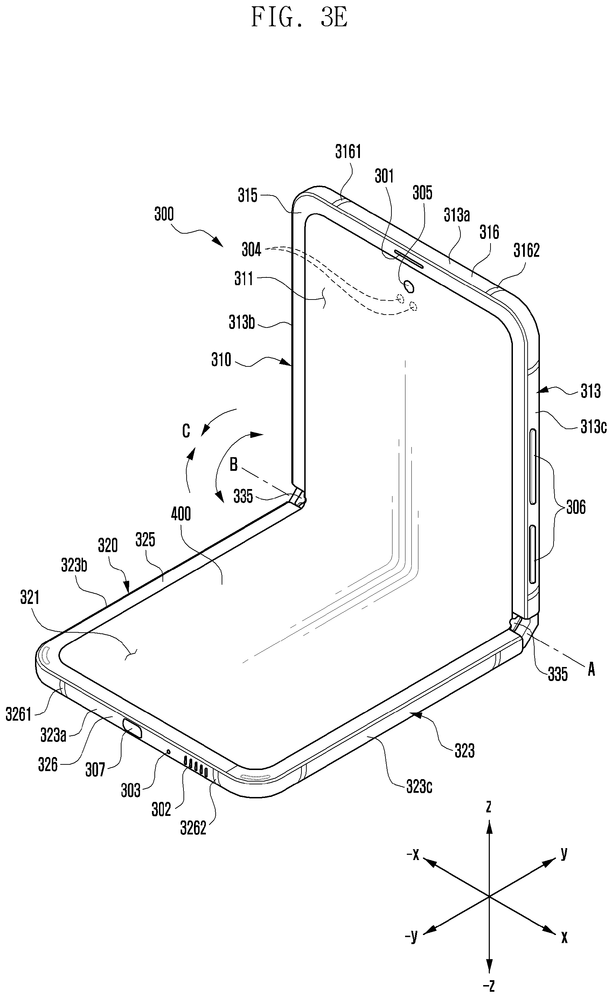

FIGS. 3A, 3B, 3C, 3D, and 3E illustrate an electronic device foldable up and down according to various embodiments.

FIG. 3A is a perspective view of the electronic device illustrating an unfolded state (unfolding state or flat state), FIG. 3B is a plan view illustrating a front surface of the electronic device in the unfolded state, and FIG. 3C is a plan view illustrating a rear surface of the electronic device in the unfolded state. FIG. 3D is a perspective view of the electronic device illustrating a folded state (or folding state), and FIG. 3E is a perspective view of the electronic device illustrating an intermediate state. According to one embodiment, the electronic device 300 may include a foldable structure folded up and down about a folding axis A of a horizontal direction.

With reference to FIG. 3A to FIG. 3E, the electronic device 300 may include a pair of housings 310 and 320 (e.g., a foldable housing) rotatably coupled to be folded to face each other about the hinge device. According to one embodiment, the hinge device may be disposed in an X-axis direction, or may be disposed in a Y-axis direction, and may also be disposed two or more to be folded in a same direction or different directions. According to one embodiment, the electronic device 300 may include a flexible display 390 (or a foldable display) disposed in an area formed by the pair of housings 310 and 320.

According to one embodiment, the first housing 310 and the second housing 320 are disposed on opposite sides around a folding axis (axis A), and may have a shape substantially symmetric with respect to the folding axis (axis A). According to one embodiment, the first housing 310 and the second housing 320 may have different angles or distances relative to each other according to whether a state of the electronic device 300 is an unfolded state (or flat state, unfolding state), a folded state (or folding state), or an intermediate state.

According to one embodiment, the pair of housings 310 and 320 may include a first housing 310 (or a first housing structure) coupled with the hinge device and a second housing 320 (or a second housing structure) coupled with the hinge device. According to one embodiment, the first housing 310, in the unfolding state, may include a first surface 311 facing a first direction (e.g., a front direction) (a z-axis direction) and a second surface 312 facing a second direction (e.g., a rear direction) (-z-axis direction) opposite to the first surface 311. According to one embodiment, the second housing 320, in the unfolding state, may include a third surface 321 facing the first direction (a z-axis direction) and a fourth surface 322 facing the second direction (- z-axis direction). According to one embodiment, the electronic device 300, in the unfolding state, may be operated in a manner in which the first surface 311 of the first housing 310 and the third surface 321 of the second housing 320 face a substantially same the first direction (a z-axis direction), and, in the folding state, the first surface 311 and the third surface 321 face each other. According to one embodiment, the electronic device 300, in the unfolding state, may be operated in a manner in which the second surface 312 of the first housing 310 and the fourth surface 322 of the second housing 320 face a substantially same the second direction (- z-axis direction), and, in the folding state, the second surface 312 and the fourth surface 322 face opposite directions with respect to each other. For example, in the folding state, the second surface 312 may face the first direction (a z-axis direction), and the fourth surface 322 may face the second direction (- z-axis direction).

According to one embodiment, the first housing 310 may include a first lateral member 313 forming at least a part of an appearance of the electronic device 300 and a first rear surface cover 314 coupled with the first lateral member 313 and forming at least a part of the second surface 312 of the electronic device 300. According to one embodiment, the first lateral member 313 may include a first side surface 313a, a second side surface 313b extending from one end of the first side surface 313a, and a third side surface 313c extending from the other end of the first side surface 313a. According to one embodiment, the first lateral member 313 may be formed in a rectangular (e.g., square or rectangular) shape through the first side surface 313a, the second side surface 313b, and the third side surface 313c.

According to one embodiment, the second housing 320 may include a second lateral member 323 forming at least a part of the appearance of the electronic device 300 and a second rear surface cover 324 coupled with the second lateral member 323 and forming at least a part of the fourth surface 322 of the electronic device 300. According to one embodiment, the second lateral member 323 may include a fourth side surface 323a, a fifth side surface 323b extending from one end of the fourth side surface 323a, and a sixth side surface 323c extending from the other end of the fourth side surface 323a. According to one embodiment, the second lateral member 323 may be formed in a rectangular shape through the fourth side surface 323a, the fifth side surface 323b, and the sixth side surface 323c.

According to one embodiment, the pair of housings 310 and 320 are not limited to an illustrated form and coupling, and may be implemented by a combination and/or coupling of another shape or component (i.e., part). For example, the first lateral member 313 may be formed integrally with the first rear surface cover 314, and the second lateral member 323 may be formed integrally with the second rear surface cover 324.

According to one embodiment, the electronic device 300, in the unfolding state, may connect the second side surface 313b of the first lateral member 313 and the fifth side surface 323b of the second lateral member 323 without any gap. According to one embodiment, the electronic device 300, in the unfolding state, may connect the third side surface 313c of the first lateral member 313 and the sixth side surface 323c of the second lateral member 323 without any gap. According to one embodiment, the electronic device 300, in the unfolding state, may be configured so that a summed length of the second side surface 313b and the fifth side surface 323b is longer than a length of the first side surface 313a and/or the fourth side surface 323a. In addition, the summed length of the third side surface 313c and the sixth side surface 323c may be configured to be longer than the length of the first side surface 313a and/or the fourth side surface 323a. According to one embodiment, the electronic device 300, in the unfolding state, may also be configured so that the summed length of the second side surface 313b and the fifth side surface 323b is shorter than, or same as, the length of the first side surface 313a and/or the fourth side surface 323a. In addition, the summed length of the third side surface 313c and the sixth side surface 323c configured to be shorter than, or same as, the length of the first side surface 313a and/or the fourth side surface 323a.

According to one embodiment, the first lateral member 313 and/or the second lateral member 323 may be formed of metal, or may further include polymer injected to metal. According to one embodiment, the first lateral member 313 and/or the second lateral member 323 may also include at least one conductive portion 316 and/or 126 electrically segmented through at least one segment portion 3161, 1162, and/or 1261, 1262 formed of polymer. In such case, the at least one conductive portion, by being electrically connected with a wireless communication circuit included in the electronic device 300, may be used as an antenna operating in at least one designated band (e.g., a legacy band).

According to one embodiment, the first rear surface cover 314 and/or the second rear surface cover 324, for example, may be formed by at least one of coated or colored glass, ceramic, polymer, or metal (e.g., aluminum, stainless steel (STS), or magnesium), or by a combination of at least two among the materials.

According to one embodiment, the flexible display 390 may be disposed to extend from the first surface 311 of the first housing 310 across the hinge device to at least a part of the third surface 321 of the second housing 320. For example, the flexible display 390 may include a first area 330a substantially corresponding to the first surface 311, a second area 330b corresponding to the third surface 321, and a third area 330c (or a bendable area) connecting the first area 330a and the second area 330b and corresponding to the hinge device. According to one embodiment, the electronic device 300 may include a first protective cover 315 (or a first protective frame, a first decoration member) coupled along an edge of the first housing 310. According to one embodiment, the electronic device 300 may include a second protective cover 325 (or a second protective frame, a second decoration member) coupled along an edge of the second housing 320. According to one embodiment, the first protective cover 315 and/or the second protective cover 325 may be formed of a metal material or a polymer material. According to one embodiment, the first protective cover 315 and/or the second protective cover 325 may be used as a decoration member. According to one embodiment, the flexible display 390 may be positioned so that an edge of the first area 330a is interposed between the first housing 310 and the first protective cover 315.

According to one embodiment, the flexible display 390 may be positioned so that an edge of the second area 330b is interposed between the second housing 320 and the second protective cover 325. According to one embodiment, the flexible display 390 may be positioned so that an edge of the flexible display 390 corresponding to the protective cap is protected through a protective cap 335 disposed in an area corresponding to the hinge device. Accordingly, the flexible display 390 may be substantially protected from the outside at an edge. According to one embodiment, the electronic device 300 may include a hinge housing 341 (e.g., a hinge cover) supporting the hinge device, being exposed to the outside when the electronic device 300 is in the folding state, and, when the electronic device 300 is in the unfolding state, being disposed to be not visible from the outside by being introduced into a first space (e.g., an inner space of the first housing 310) and a second space (e.g., an inner space of the second housing 320). According to one embodiment, the flexible display 390 may be disposed to extend from at least a part of the second surface 312 to at least a part of the fourth surface 322. In such case, the electronic device 300 may be folded to allow the flexible display 390 to be exposed to the outside (out-folding method).

According to one embodiment, the electronic device 300 may include a sub display 331 disposed separately from the flexible display 390. According to one embodiment, the sub display 331, by being disposed to be at least partially exposed in the second surface 312 of the first housing 310, may display state information of the electronic device 300, replacing a display function of the flexible display 390 in a case of the folding state. According to one embodiment, the sub display 331 may be disposed to be visible from the outside through at least a partial area of the first rear surface cover 314. According to one embodiment, the sub display 331 may also be disposed in the fourth surface 322 of the second housing 320. In such case, the sub display 331 may be disposed to be visible from the outside through at least a partial area of the second rear surface cover 324.

According to one embodiment, the electronic device 300 may include at least one of an input device (e.g., a microphone 303), a sound output device (e.g., a receiver for a call 301, a speaker 302), a sensor module 304, a camera device (e.g., a first camera device 305, a second camera device 308), a key input device 306, or a connector port 307. In an illustrated embodiment, the input device (e.g., the microphone 303), the sound output device (e.g., the receiver for a call 301, the speaker 302), the sensor module 304, the camera device (e.g., the first camera device 305, the second camera device 308), the key input device 306, or the connector port 307 refers to a hole or a shape formed in the first housing 310 or the second housing 320, however, may be defined to include a substantial electronic component (i.e., part) (e.g., the input device, the sound output device, the sensor module, or the camera device) disposed in an inside of the electronic device 300 and operated through the hole or the shape.

According to one embodiment, the input device may include at least one microphone 303 disposed in the second housing 320. According to one embodiment, the sound output device may include receivers for a call 301 and speakers 302. According to one embodiment, the sound output device may include a receiver for a call 301 disposed in the first housing 310 and a speaker 302 disposed in the second housing 320. According to one embodiment, the input device (e.g., the microphone 303), the sound output device (e.g., the receiver for a call 301, the speaker 302), and the connector port 307 may be disposed in a space provided in the first housing 310 and/or the second housing 320 of the electronic device 300, and may be exposed to an external environment through at least one hole formed in the first housing 310 and/or the second housing 320. According to one embodiment, at least one the connector port 307 may be used in order to transmit and receive power and/or data with an external electronic device.

According to one embodiment, the sensor module 304 may generate an electrical signal or a data value corresponding to an operating state of an inside of the electronic device 300, or an environmental state of the outside. The sensor module 304, for example, may detect an external environment through the first surface 311 of the first housing 310.

According to one embodiment, the camera devices may include the first camera device 305 (e.g., a front camera device) disposed in the first surface 311 of the first housing 310 and the second camera device 308 disposed in the second surface 312 of the first housing 310. The electronic device 300 may further include a flash 309 disposed near the second camera device 308.

According to one embodiment, the key input device (e.g., a key button 306) may be disposed in the third side surface 313c of the first lateral member 313 of the first housing 310. According to one embodiment, the key input device (e.g., a key button 306) may also be disposed in at least one side surface among other side surfaces 313a and 113b of the first housing 310 and/or side surfaces 323a, 123b, and 123c of the second housing 320.

With reference to FIG. 3E, the electronic device 300 may also be operated to maintain an intermediate state through the hinge device. In such case, the electronic device 300 may also control the flexible display 390 so that different content is displayed in a display area corresponding to the first surface 311 and a display area corresponding to the third surface 321. According to one embodiment, the electronic device 300 may be operated to a substantially unfolding state (e.g., an unfolding state of FIG. 3A) and/or a substantially folding state (e.g., a folding state of FIG. 3D) based on a certain inflection angle (e.g., in the intermediate state, an angle between the first housing 310 and the second housing 320) through the hinge device. For example, the electronic device 300, in a state unfolded at a certain inflection angle through the hinge device, when a pressing force is provided in an unfolding direction (B direction), may be operated to transition to the unfolding state (e.g., the unfolding state of FIG. 3A). For example, the electronic device 300, in the state unfolded at the certain inflection angle through the hinge device, when the pressing force is provided in a folding-intended direction (C direction), may be operated to transition to a closed state (e.g., the folding state of FIG. 3D). In one embodiment, the electronic device 300 may also be operated to maintain an unfolded state (not illustrated) at various angles through the hinge device.

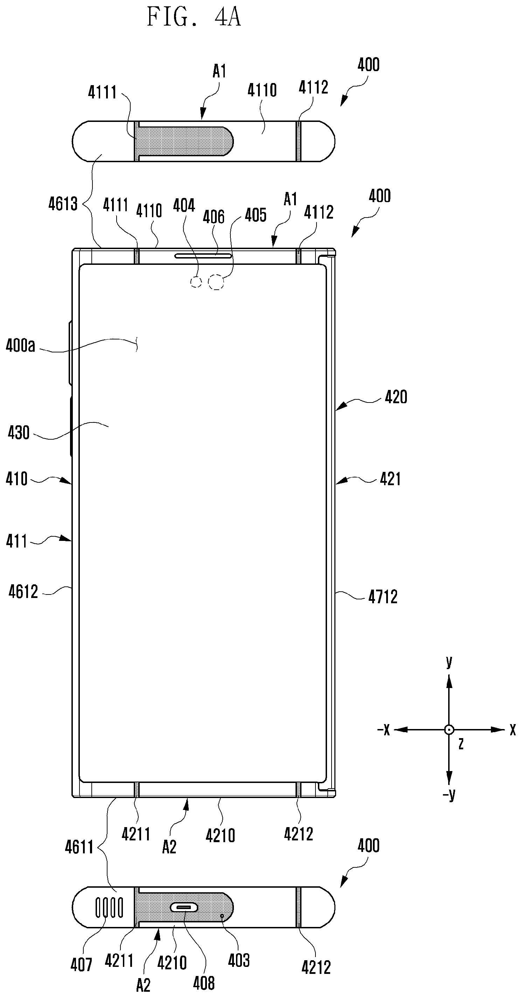

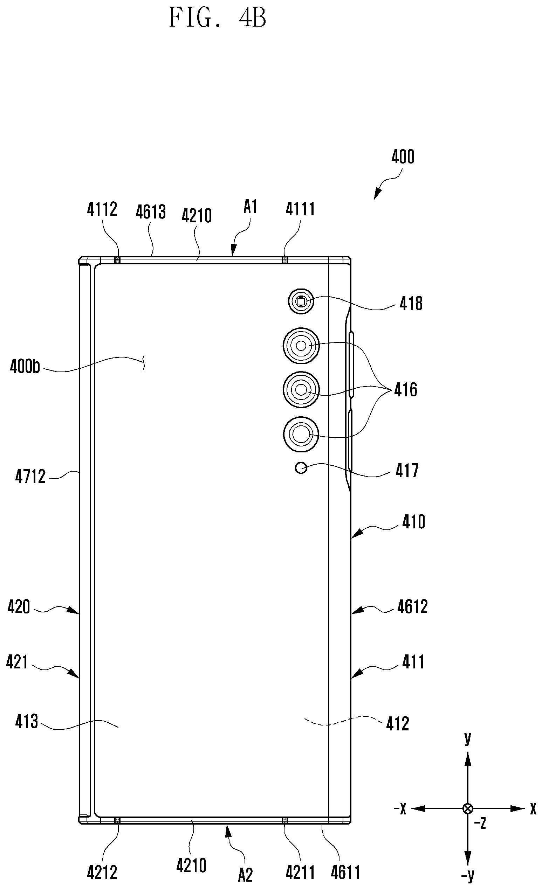

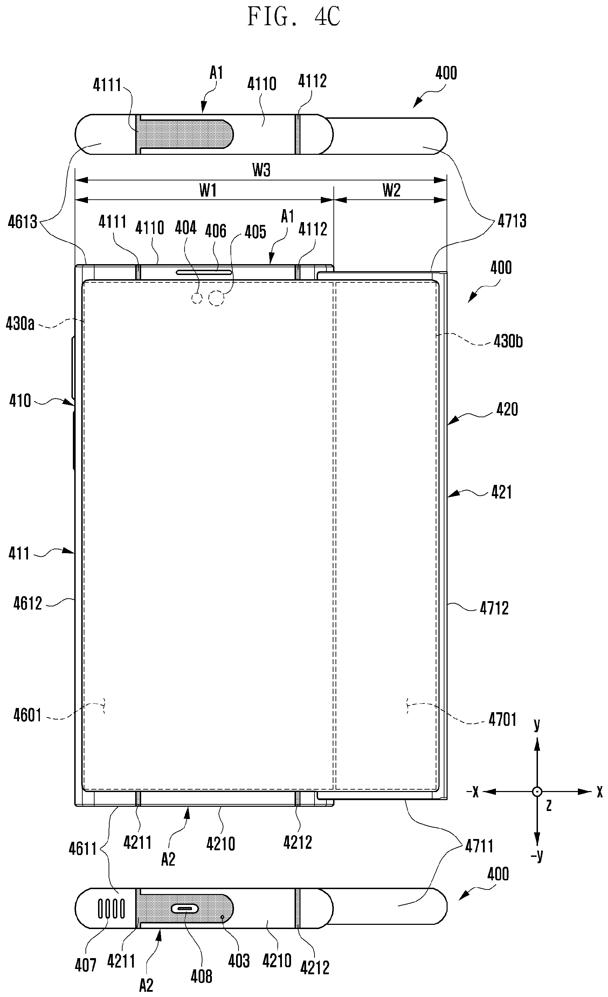

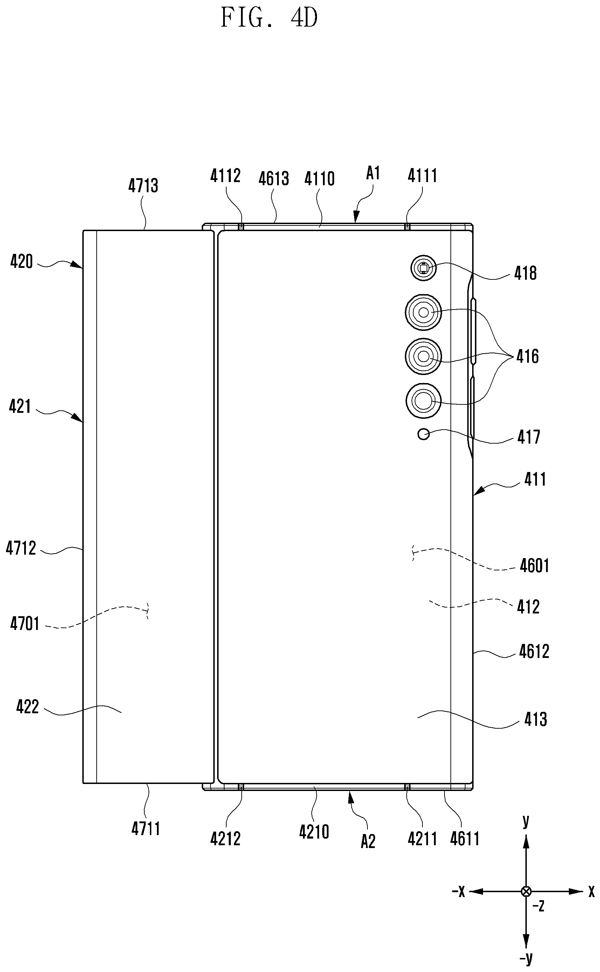

Hereinafter, through FIG. 4A, FIG. 4B, FIG. 4C, and FIG. 4D, a structure of an electronic device including a display and a housing structure capable of being expanded in a horizontal direction, that is, capable of being expanded left or right relative to a vertical direction (or portrait type) of the electronic device, is decided to be described.

FIG. 4A and FIG. 4B are drawings illustrating a front surface and a rear surface when the electronic device capable of being expanded in the horizontal direction according to various embodiments is in a slide-in state, and FIG. 4C and FIG. 4D are drawings illustrating the front surface and the rear surface when the electronic device is in a slide-out state.

With reference to FIG. 4A to FIG. 4D, the electronic device 400 may include a first housing part 410 (or, a fixed portion, a base housing), a second housing part 420 (e.g., or, a moving portion, a slide housing) movably coupled from the first housing part 410 within a designated direction (e.g., an x-axis direction) and within a designated distance, and a flexible display 430 disposed to be supported through at least a part of the first housing part 410 and the second housing part 420. The flexible display 430 may include an expandable display or a stretchable display. The flexible display 430 may have a size of an area seen from the front surface changed (e.g., expanded or contracted) as the second housing part 420 is moved from the first housing part 410. The flexible display 430 may include at least a part among a configuration and/or a function of a display module 40 disclosed in FIG. 1.

According to one embodiment, at least a part of the second housing part 420 may be accommodated in a first space 4601 of the first housing part 410, thereby the electronic device 400 may be changed to the slide-in state. The electronic device 400 may include a bendable member (or bendable support member) (e.g., a multi-joint hinge module or a multi-bar assembly) forming at least partially a same plane as at least a part of the first housing part 410 in the slide-out state, and being accommodated in a second space 4701 of the second housing part 420 at least partially in the slide-in state.

According to one embodiment, at least a part of the flexible display 430, in the slide-in state, by being accommodated into an inner space 4701 of the second housing part 420 while being supported by the bendable member, may be disposed to be not visible from the outside. At least a part of the flexible display 430, in the slide-out state, while being supported by the bendable member forming at least partially a same plane as the first housing part 410, may be disposed to be visible from the outside.

According to various embodiments, the electronic device 400 may include a front surface 400a (e.g., a first surface), a rear surface 400b (e.g., a second surface) facing a direction opposite to the front surface 400a, and a side surface (not illustrated) surrounding a space between the front surface 400a and the rear surface 400b. For example, the electronic device 400 may have the first housing part 410 including a first lateral member 411, and the second housing part 420 including a second lateral member 421.

According to one embodiment, the first lateral member 411 may include a first side surface 4611 having a first length along a first direction (e.g., an x-axis direction), a second side surface 4612 extended from the first side surface 4611 to have a second length longer than the first length along a direction substantially vertical (e.g., a y-axis direction), and a third side surface 4613 extended from the second side surface 4612 to be substantially parallel with the first side surface 4611 and having the first length. The first lateral member 411 may be formed of a conductive material (e.g., metal) at least partially. At least a part of the first lateral member 411 may include a first support member 412 extended to at least a part of the first space 4601 of the first housing part 410.

According to one embodiment, the second lateral member 421 may include a fourth side surface 4711 corresponding at least partially to the first side surface 4611 and having a third length, a fifth side surface 4712 extended from the fourth side surface 4711 in a direction substantially parallel with the second side surface 4612 and having a fourth length longer than the third length, and a sixth side surface 4713 extended from the fifth side surface 4712 to correspond to the third side surface 4613 and having the third length. The second lateral member 421 may be formed of the conductive material (e.g., metal) at least partially. At least a part of the second lateral member 421 may include a second support member 422 extended to at least a part of the second space 4701 of the second housing part 420.

According to one embodiment, the first side surface 4611 and the fourth side surface 4711 and the third side surface 4613 and the sixth side surface 4713 may be slidably coupled with respect to each other. The electronic device 400, in the slide-in state, by the fourth side surface 4711 being overlapped with the first side surface 4711, may be disposed to be substantially not visible from the outside. The electronic device 400, in the slide-in state, by the sixth side surface 4713 being overlapped with the third side surface 4713, may be disposed to be substantially not visible from the outside. In some embodiment, the electronic device 400, in the slide-in state, may also be disposed so that at least a part of the fourth side surface 4711 and the sixth side surface 4713 is at least partially visible from the outside.

According to one embodiment, the electronic device 400, in the slide-in state, by the second support member 422 being overlapped with the first support member 412, may be disposed to be substantially not visible from the outside. In some embodiment, a part of the second support member 422, in the slide-in state, by being overlapped with the first support member 412, may be disposed to be not visible from the outside, and a remaining part of the second support member 422 may also be disposed to be visible from the outside.

According to one embodiment, the electronic device 400 may include a rear surface cover 413 disposed in at least a part of the first housing part 410. The rear surface cover 413 may be disposed in the rear surface 400b of the electronic device 400 through at least a part of the first support member 412. In some embodiment, the rear surface cover 413 may also be formed integrally with the first lateral member 411. The rear surface cover 413 may be formed by polymer, coated or colored glass, ceramic, metal (e.g., aluminum, stainless steel (STS), or magnesium), or a combination of at least two among materials. In some embodiment, the rear surface cover 413 may also extend to at least a part of the first lateral member 411. At least a part of the first support member 412 may also be replaced with the rear surface cover 413. The electronic device 400, in the second housing part 420, may also include another rear surface cover (e.g., a second rear surface cover) disposed in at least a part of the second support member 422, or replaced with at least a part of the second support member 422.

According to one embodiment, the electronic device 400 may include the flexible display 430 (e.g., an expandable display) disposed to be supported by at least a part of the first housing part 410 and the second housing part 420. The flexible display 430 may include a first part 430a (e.g., a first display) always seen from the outside in the slide-in state or the slide-out state, and a second part 430b (e.g., a second display) extended from the first part 430a and expanded in a designated direction (e.g., an x-axis direction) together with the second housing part 420 in the slide-out state. The first part 430a of the flexible display 430 may form a first display area, and the second part 430b may form a second display area. The first part 430a of the flexible display 430 may form a flat surface, and the second part 430b, in the slide-in state, may form a bendable part accommodated at least partially into the second space 4701 of the second housing part 420 so that at least a part is not visible from the outside. The first part 430a may be disposed to be supported by the first housing part 410, and the second part 430b may be disposed to be supported by at least a part of the bendable member. The second part 430b of the flexible display 430, as the second housing part 420 is drawn out along a designated direction (e.g., an x-axis direction), while being supported by the bendable member, may be extended from the first part 430a, and may be disposed to be visible from the outside while forming a plane substantially same as the first part 430a. The second part 430b of the flexible display 430, as the second housing part 420 is introduced into the first housing part 410 along a designated direction (e.g., a -x-axis direction), may be accommodated into the second space 4201 of the second housing part 420, and may be disposed to be not visible from the outside. The electronic device 400, as the second housing part 420 is moved (e.g., drawn out) in a sliding method along a designated direction (e.g., an x-axis direction) from the first housing part 410, may have a display surface area of the flexible display 430 expanded.

In one embodiment, the electronic device 400, in the slide-in state, may display at least one application by using the first part 430a of the flexible display 430 (e.g., the first display area). In another embodiment, the electronic device 400, in a state in which the second housing part 420 is drawn out from the first housing part 410, may display at least one application by using the first part 430a (e.g., the first display area) and the second part 430b (e.g., the second display area). In various embodiments, the flexible display 430, in the slide-out state, may display a first application A by using the first part 430a, and may display a second application B by using the second part 430b.

In one embodiment, with reference to FIG. 4C, although a size of the first part 430a (e.g., the first display area) of the flexible display 430 is illustrated as being formed larger than a size of the second part 430b (e.g., the second display area), a size of the first part 430a and the second part 430b may also be formed substantially same, and a size of the second part 430b may also be formed larger than the size of the first part 430a. A size of the first part 430a and the second part 430b of the flexible display 430 may be formed as various sizes same as or different from each other.

According to one embodiment, the first housing part 410 and the second housing part 420 may be operated in a sliding method so that an overall width is variable with respect to each other. With reference to FIG. 4C, the electronic device 400, in the slide-in state, may be configured to have a first width W1 from the second side surface 4612 to the fifth side surface 4712. The electronic device 400, in the slide-out state, by at least a part of the bendable member accommodated in the second space 4701 of the second housing part 410 being moved to have an additional a second width W2, may be configured to have a third width W3 larger than the first width W1. For example, the flexible display 430, in the slide-in state, may have a display surface area substantially corresponding to the first width W1, and, in the slide-out state, may have an expanded the display surface area substantially corresponding to the third width W3. In one embodiment, in FIG. 4C, although the second width W2 is illustrated as having a width smaller than the first width W1, the first width W1 and the second width W2 may be configured to have substantially a same width. In one embodiment, the first part 430a and the second part 430b of the flexible display 430 may be configured to have substantially a same display screen.

According to one embodiment, the electronic device 400 may include a driving unit (or an actuator) (not illustrated) for moving the second housing part 420 from the first housing part 410. For example, the driving unit may include a rotation motor structure, and, when a user presses a specific button, and/or moves a part of the second housing part 420, may provide a driving force for slide movement of the second housing part 420 by activating a motor.

According to one embodiment, the electronic device 400 may include at least one of an input module (e.g., a microphone 403) disposed in the first space 4601 of the first housing part 410, a sound output module (e.g., a receiver for a call 406 or a speaker 407), a sensor module 404 or 317, a camera module (e.g., a first camera module 405 or a second camera module 416), a connector port 408, a key input device (not illustrated), or an indicator (not illustrated). The electronic device 400 may also be configured so that at least one among the above-described constituent elements is omitted, or other constituent elements are additionally included. In another embodiment, at least one among the above-described constituent elements may also be disposed in the second space 4701 of the second housing part 420.

According to various embodiments, the input module may include an embodiment related to the input module 150 of FIG. 1. The sound output module may include an embodiment related to the sound output module 155 of FIG. 1. The sensor module 404 or 317 may include an embodiment related to the sensor module 176 of FIG. 1. The camera module may include an embodiment related to the camera module 180 of FIG. 1.

According to one embodiment, the input module (e.g., the input module 150 of FIG. 1) may include a microphone 403. In some embodiment, the input module (e.g., the microphone 403) may also include a plurality of microphones disposed to be capable of sensing a direction of a sound. The sound output module, for example, may include a receiver for a call 406 and a speaker 407. The speaker 407, in the slide-out state, may face the outside through at least one speaker hole formed in the first housing part 410. The connector port 408, in the slide-out state, may face the outside through a connector port hole formed in the first housing part 410. The receiver for a call 406 may also include a speaker (e.g., a piezo speaker) operated while a separate speaker hole is excluded.

According to various embodiments, the sensor module 404 or 317 (e.g., the sensor module 176 of FIG. 1) may generate an electrical signal or a data value corresponding to an operating state of an inside of the electronic device 400, or an environmental state of the outside. The sensor modules 404 and 317, for example, may include a first sensor module 404 (e.g., a proximity sensor or an illuminance sensor) disposed in the front surface 400a of the electronic device 400 and/or a second sensor module 417 (e.g., an HRM (heart rate monitoring) sensor) disposed in the rear surface 400b. The first sensor module 404 may be disposed in the front surface 400a of the electronic device 400, in a rear surface (e.g., a -z-axis direction) of the flexible display 430. The first sensor module 404 and/or the second sensor module 417 may include at least one of a proximity sensor, an illuminance sensor, a TOF (time of flight) sensor, an ultrasonic sensor, a fingerprint recognition sensor, a gesture sensor, a gyro sensor, a barometric sensor, a magnetic sensor, an acceleration sensor, a grip sensor, a color sensor, an IR (infrared) sensor, a biometric sensor, a temperature sensor, or a humidity sensor.

According to one embodiment, the camera module (e.g., the camera module 180 of FIG. 1) may include a first camera module 405 disposed in the front surface 400a of the electronic device 400 and a second camera module 416 disposed in the rear surface 400b. The electronic device 400 may include a flash 418 positioned near the second camera module 416. The camera modules 405 and 316 may include one or a plurality of lenses, an image sensor, and/or an image signal processor. The first camera module 405 may be disposed in a rear surface (e.g., a -z-axis direction) of the flexible display 430, and may also be configured to capture a subject through a part of an activation area among activation area of the flexible display 430. The flash 418, for example, may include a light emitting diode or a xenon lamp.

According to one embodiment, among the camera modules, the first camera module 405, among the sensor modules 404 and 317, a certain sensor module 404 may be disposed to detect an external environment through the flexible display 430.

According to one embodiment, the electronic device 400 may include at least one antenna A1 and/or A2 electrically connected with a wireless communication circuit (e.g., the wireless communication module 192 of FIG. 1) disposed in the first space 4601 of the first housing part 410. The at least one antenna A1 and/or A2 may include a first antenna A1 disposed in an upper area of the electronic device 400 and a second antenna A2 disposed in a lower area.

According to one embodiment, the first antenna A1 may include a first conductive portion 4110 segmented through at least one non-conductive portion 4111 and/or 4112 in the third side surface of the first lateral member 411. The first conductive portion 4110 may be disposed to be segmented through a first non-conductive portion 4111 and a second non-conductive portion 4112 spaced apart by a designated interval, and may be electrically connected with the wireless communication circuit (e.g., the wireless communication module 192 of FIG. 1). The second antenna A2 may include a second conductive portion 4210 segmented through at least one non-conductive portion 4211 and/or 4212 in the first side surface of the first lateral member 411. The second conductive portion 4210 may be disposed to be segmented through a third non-conductive portion 4211 and a fourth non-conductive portion 4212 spaced apart by a designated interval, and may be electrically connected with the wireless communication circuit (e.g., the wireless communication module 192 of FIG. 1).

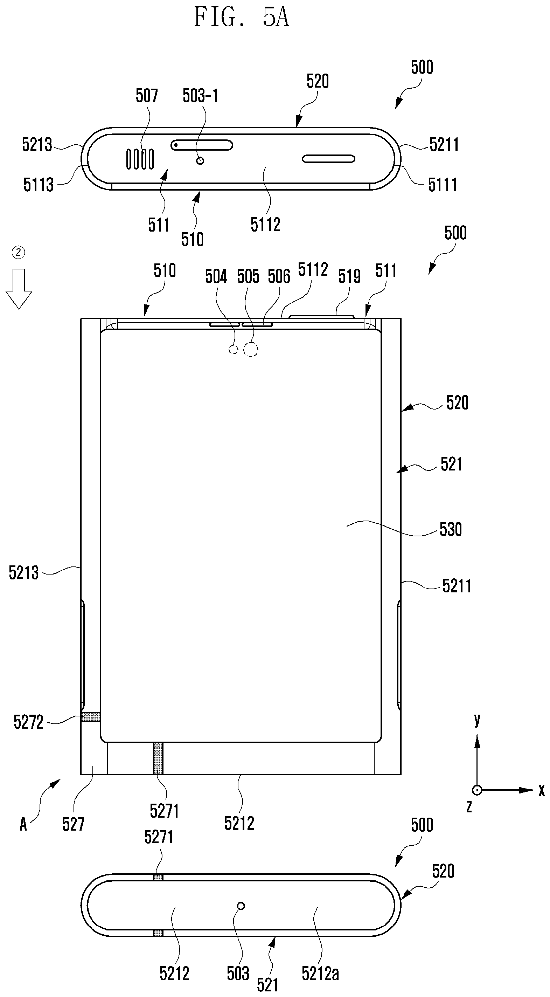

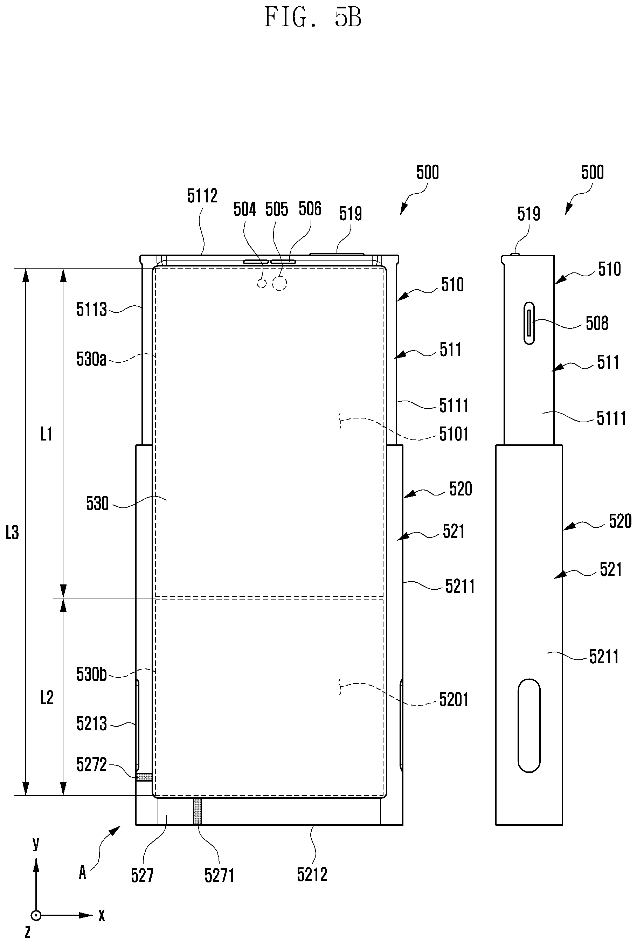

Hereinafter, through FIG. 5A and FIG. 5B, a structure of an electronic device including a display capable of being expanded in a vertical direction, that is, capable of being expanded up or down relative to a vertical direction (or portrait type) of the electronic device, is decided to be described.

FIG. 5A is a drawing illustrating a case in which the electronic device expandable in the longitudinal direction according to one embodiment is in a slide-in state. FIG. 5B is a drawing illustrating a front surface when the electronic device expandable in the longitudinal direction according to one embodiment is in a slide-out state.

With reference to FIG. 5A and FIG. 5B, the electronic device 500 may include a first housing part 510, a second housing part 520 slidably coupled with the first housing part 510 in a designated direction (e.g., ① direction or ② direction) (e.g., a y-axis direction), and a flexible display 530 disposed to be supported through at least a part of the first housing part 510 and the second housing part 520. The flexible display 530 may include an expandable display or a stretchable display. The flexible display 530 may include at least a part among a configuration and/or a function of a display module 160 disclosed in FIG. 1.

According to one embodiment, the electronic device 500, based on the second housing part 520 gripped by a user, may be disposed so that the first housing part 510 is drawn out (slide-out) in a first direction (① direction), or is introduced (slide-in) in a second direction (② direction) opposite to the first direction (① direction). According to one embodiment, at least a part of the first housing part 510 including the first space 5101 may be accommodated in the second space 5201 of the second housing part 520, thereby may be changed to the slide-in state.

According to one embodiment, the electronic device 500 may include a bendable member (or bendable support member) forming at least partially a same plane as at least a part of the first housing part 510 in the slide-out state, and being accommodated at least partially into the second space 5201 of the second housing part 520 in the slide-in state.

According to one embodiment, at least a part of the flexible display 530, in the slide-in state, by being accommodated into an inner space 5201 of the second housing part 520 while being supported by the bendable member, may be disposed to be not visible from the outside. According to one embodiment, at least a part of the flexible display 530, in the slide-out state, while being supported by the bendable member forming at least partially a same plane as the first housing part 510, may be disposed to be visible from the outside.

According to one embodiment, the electronic device 500 may include the first housing part 510 including a first lateral member 511 and the second housing part 520 including a second lateral member 521. According to one embodiment, the first lateral member 511 may include a first side surface 5111 having a first length along the first direction (e.g., a y-axis direction), a second side surface 5112 extended from the first side surface 5111 to have a second length shorter than the first length along a direction substantially vertical (e.g., an x-axis direction), and a third side surface 5113 extended from the second side surface 5112 to be substantially parallel with the first side surface 5111 and having the first length. According to one embodiment, the first lateral member 511 may be formed of a conductive material (e.g., metal) at least partially. In some embodiment, the first lateral member 511 may be formed by a combination of a conductive material and a non-conductive material (e.g., polymer).

According to one embodiment, the first housing part 510 may include a first support member 512 extended from at least a part of the first lateral member 511 to at least a part of the first space 5101. According to one embodiment, the first support member 512 may be formed integrally with the first lateral member 511. In some embodiment, the first support member 512 is configured separately from the first lateral member 511, and may also be structurally coupled with the first lateral member 511.

According to one embodiment, the second lateral member 521 may include a fourth side surface 5211 corresponding at least partially to the first side surface 5111 and having a third length, a fifth side surface 5212 extended from the fourth side surface 5211 in a direction substantially parallel with the second side surface 5112 and having a fourth length shorter than the third length, and a sixth side surface 5213 extended from the fifth side surface 5212 to correspond to the third side surface 5113 and having the third length. According to one embodiment, the second lateral member 521 may be formed of a conductive material (e.g., metal) at least partially. In some embodiment, the second lateral member 521 may be formed by a combination of a conductive material and a non-conductive material (e.g., polymer). According to one embodiment, at least a part of the second lateral member 521 may include a second support member 522 extended to at least a part of the second space 5201 of the second housing part 520. According to one embodiment, the second support member 522 may be formed integrally with the second lateral member 521. In some embodiment, the second support member 522 is configured separately from the second lateral member 521, and may also be structurally coupled with the second lateral member 521.

According to one embodiment, the first side surface 5111 and the fourth side surface 5211 may be slidably coupled with respect to each other. According to one embodiment, the third side surface 5113 and the sixth side surface 5213 may be slidably coupled with respect to each other. According to one embodiment, in the slide-in state, the first side surface 5111, by being overlapped with the fourth side surface 5211, may be disposed to be substantially not visible from the outside. According to one embodiment, in the slide-in state, the third side surface 5113, by being overlapped with the sixth side surface 5213, may be disposed to be substantially not visible from the outside. In some embodiment, at least a part of the first side surface 5111 and the third side surface 5113, in the slide-in state, may also be disposed to be at least partially visible from the outside. According to one embodiment, in the slide-in state, the first support member 512, by being overlapped with the second support member 522, may be disposed to be substantially not visible from the outside.

According to one embodiment, the electronic device 500, in a rear surface, may include a first rear surface cover 513 coupled with the first housing part 510. According to one embodiment, the first rear surface cover 513 may be disposed through at least a part of the first support member 512. In some embodiment, the first rear surface cover 513 may also be formed integrally with the first lateral member 511. According to one embodiment, the first rear surface cover 513 may be formed by polymer, coated or colored glass, ceramic, metal (e.g., aluminum, stainless steel (STS), or magnesium), or a combination of at least two among these materials. In some embodiment, the first rear surface cover 513 may also extend to at least a part of the first lateral member 511. In some embodiment, at least a part of the first support member 512 may also be replaced with the first rear surface cover 513.

According to one embodiment, the electronic device 500, in the rear surface, may include a second rear surface cover 523 coupled with the second housing part 520. According to one embodiment, the second rear surface cover 523 may be disposed through at least a part of the second support member 522. In some embodiment, the second rear surface cover 523 may also be formed integrally with the second lateral member 521. According to one embodiment, the second rear surface cover 523 may be formed by polymer, coated or colored glass, ceramic, metal (e.g., aluminum, stainless steel (STS), or magnesium), or a combination of at least two among these materials. In some embodiment, the second rear surface cover 523 may also extend to at least a part of the second lateral member 521. In some embodiment, at least a part of the second support member 522 may also be replaced with the second rear surface cover 523.

According to one embodiment, the electronic device 500 may include the flexible display 530 disposed to be supported by at least a part of the first housing part 510 and the second housing part 520. According to one embodiment, the flexible display 530 may include a first part 530a (e.g., a flat portion) always seen from the outside and a second part 530b (e.g., a bendable portion) extended from the first part 530a and accommodated at least partially into the second space 5201 of the second housing part 520 so that at least a part is not visible from the outside in the slide-in state.

According to one embodiment, the first part 530a may be disposed to be supported by the first housing part 510, and the second part 530b may be disposed to be supported by at least a part of the bendable member.

According to one embodiment, the second part 530b of the flexible display 530, in a state in which the first housing part 510 is drawn out along the first direction (① direction), while being supported by the bendable member, may be extended from the first part 530a, may form a plane substantially same as the first part 530a, and may be disposed to be visible from the outside. According to one embodiment, the second part 530b of the flexible display 530, in a state in which the second housing part 520 is introduced along the second direction (② direction), may be accommodated into the second space 5201 of the second housing part 520, and may be disposed to be not visible from the outside. Accordingly, the electronic device 500 may induce the display surface area of the flexible display 530 to be variable as the first housing part 510 is moved in a sliding method along a designated direction (e.g., a y-axis direction) from the second housing part 520.

According to one embodiment, the flexible display 530, according to sliding movement of the first housing part 510 moved based on the second housing part 520, may have a length in the first direction (① direction) be variable. For example, the flexible display 530, in the slide-in state, may have a first display surface area (e.g., an area corresponding to the first part 530a) corresponding to a first length L1. According to one embodiment, the flexible display 530, in the slide-out state, according to the sliding movement of the first housing part 510 moved additionally by a second length L2 based on the second housing part 520, may be expanded to have an area corresponding to a third length L3 longer than the first length L1 and including a third display surface area larger than the first display surface area (e.g., an area including the first part 530a and the second part 530b).

According to one embodiment, the electronic device 500 may include at least one of an input module (e.g., a microphone 503-1) disposed in the first space 5101 of the first housing part 510, a sound output device (e.g., a receiver for a call 506 or a speaker 507), a sensor module 504, a camera module (e.g., a first camera module 505 or a second camera module of a rear surface), a connector port 508, a key input device 519, or an indicator (not illustrated). According to one embodiment, the electronic device 500 may include another an input device (e.g., a microphone 503) disposed in the second housing part.

According to one embodiment, slide-in and slide-out operations of the electronic device 500 may be performed automatically. For example, the slide-in and slide-out operations of the electronic device 500 may be performed through a driving motor including a pinion gear (not illustrated) disposed in the first space 5101 of the first housing part 510, and a gearing operation of a rack gear disposed in the second space 5201 of the second housing part 520 and meshed with a pinion gear 561. For example, a processor (e.g., the processor 120 of FIG. 1) of the electronic device 500, when detecting a triggering operation for being changed from the slide-in state to the slide-out state, or for being changed from the slide-out state to the slide-in state, may operate a driving unit (e.g., a driving motor) disposed in an inside of the electronic device 500. According to one embodiment, the triggering operation may include selecting (e.g., touching) an object displayed on the flexible display 530, or an operation of a physical button (e.g., a key button) included in the electronic device 500.

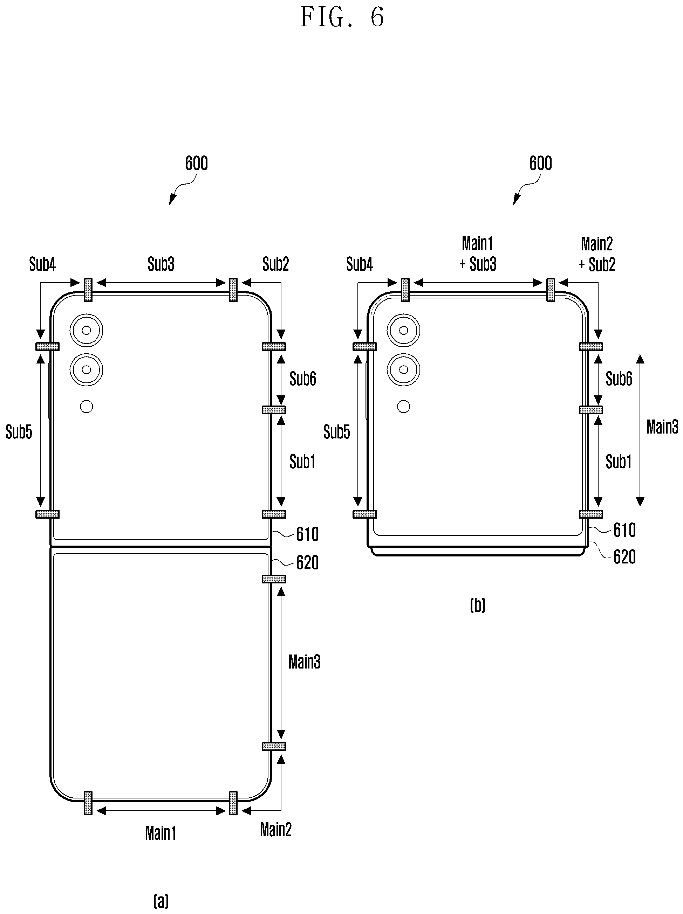

FIG. 6 illustrates antennas disposed in a foldable type electronic device foldable up and down according to one embodiment.

According to one embodiment, the electronic device 600 may be the foldable type electronic device (e.g., the electronic device 300 of FIG. 3A to FIG. 3E) foldable up and down about a folding axis of a horizontal direction (e.g., the folding axis A of FIG. 3A to FIG. 3E).

According to one embodiment, the electronic device 600 may include a first housing 610 (e.g., the first housing 310 of FIG. 3A to FIG. 3E) and a second housing 620 (e.g., the second housing 320 of FIG. 3A to FIG. 3E) rotatably coupled with the first housing 610 through a hinge structure. According to one embodiment, at least one antenna may be disposed on the first housing 610 corresponding to an upper main body, and at least one antenna may be disposed on the second housing 620 corresponding to a lower main body.

According to one embodiment, the electronic device 600 may support various wireless communication type (e.g., 4G LTE, 5G NR cellular wireless communication, Wi-Fi, Bluetooth, GPS, UWB, Zigbee). Hereinafter, among wireless communication type supported by the electronic device 600, cellular mobile communication such as 4G LTE (long term evolution), 5G NR (new radio) may be referred to as cellular communication or WWAN (wireless wide area network). Also, wireless LAN communication defined in IEEE 802.11 may be referred to as wireless LAN communication, WLAN (wireless local area network), or Wi-Fi.

According to one embodiment, a frequency band of wireless communication supported by the electronic device 600 may also vary. Accordingly, the electronic device 600 may include a plurality of antennas in order to support wireless communication of various frequency bands. With reference to FIG. 6, on the second housing 620 (or the lower main body), a Main 1 antenna, a Main 2 antenna, and a Main 3 antenna may be disposed, and, on the first housing 610 (or the upper main body), a Sub 1 antenna, a Sub 2 antenna, a Sub 3 antenna, a Sub 4 antenna, a Sub 5 antenna, and a Sub 6 antenna may be disposed.

According to one embodiment, each antenna may transmit and/or receive a signal of at least one wireless communication type in a determined frequency band. For example, the Main 1 antenna disposed on the second housing 620 (or the lower main body) may support a WWAN low-frequency band (e.g.; LTE B5, NR n28) and a mid-frequency band (e.g., LTE B1), the Main 2 antenna may support a WWAN high-frequency band (e.g., LTE B40), and the Main 3 antenna may support a WWAN mid-frequency band (e.g., NR n77, n79) and a high-frequency band. According to one embodiment, the Sub 1 antenna disposed on the first housing 610 (or the upper main body) may support a WWAN low-frequency band (e.g., LTE B5), the Sub 2 antenna may support a WWAN high-frequency band and WLAN 2.4GHz and 5GHz bands, the Sub 3 antenna may support a WWAN low-frequency band and a mid-frequency band, the Sub 4 antenna may support WLAN 2.4GHz and 5GHz bands, the Sub 5 antenna may support a WWAN mid-frequency band (e.g., LTE B1) and a high-frequency band (e.g., LTE B40, NR n41), and the Sub 6 antenna may support a WWAN high-frequency band (e.g., NR n79). Each antenna may be used to transmit a signal of a determined frequency band, may be used to receive, or may be used for both transmission and reception.

According to one embodiment, the electronic device 600 may transmit and/or receive both a WWAN signal and a short-range wireless signal (e.g., a WLAN signal, a Bluetooth signal, a UWB signal, a Zigbee signal), and, in a same or adjacent frequency band, the WWAN signal and the short-range wireless signal may be transmitted and received simultaneously. For example, an LTE B40 band among WWAN and a 2.4GHz band of WLAN are frequency bands adjacent to each other, and an NR n79 band among WWAN and a 5GHz band of WLAN may be frequency bands adjacent to each other. In this case, in an Rx path including an antenna receiving a WWAN or WLAN signal, a phenomenon in which an Rx component (i.e., part) (e.g., an LNA (low noise amplifier)) is damaged and/or an Rx BLER (block error rate) becomes large may occur. More specifically, when WWAN and WLAN operate simultaneously, due to a neighboring frequency, an n-th harmonic component, a frequency difference between Tx, and the like, a WWAN output signal may give performance degradation to a WLAN Rx path, or a WLAN output signal may give performance degradation to a WWAN Rx path. Hereinafter, when WWAN and WLAN operate simultaneously, a Tx side affecting an opponent Rx path is referred to as an aggressor, and an Rx side affected by an opponent Tx is referred to as a victim. Bluetooth uses a signal of a 2.4GHz band, and, even in a situation in which Bluetooth and WWAN are operating simultaneously, may affect an opponent Rx path. In this document, embodiments in which WLAN and WWAN operate simultaneously are described as an example, however, even when Bluetooth and WWAN (e.g., LTE B40) operate simultaneously, various embodiments of this document may be applied.

Table 1 shows an example of frequency bands of WLAN and WWAN capable of affecting each other during simultaneous operation.

**[Table 1]**

| Band | Channel Frequency range | Rx/Tx | Victim/A ggressor | Band | Channel Frequency range | Rx/Tx | Victim/A ggressor |
|---|---|---|---|---|---|---|---|
| WLAN 2.4G | 2402-2437 | Rx/Tx | V/A | LTE B40 | 2300-2350 | Rx/Tx | V/A |
| WLAN 2.4G | 2402-2447 | Rx/Tx | V/A | LTE B40 | 2351-2370 | Rx/Tx | V/A |
| WLAN 2.4G | 2402-2482 | Rx/Tx | V/A | LTE B40 | 2371-2400 | Rx/Tx | V/A |
| WLAN 2.4G | 2447-2482 | Rx/Tx | V/A | LTE B41 | 2496-2520 | Rx/Tx | V/A |
| WLAN 2.4G | 2447-2482 | Rx | Victim | LTE B7 | 2500-2524 | Tx | Aggressor |
| WLAN 5G | 5170-5210 | Rx | Victim | NR n79 | 4400-5000 | Tx | Aggressor |

Table 2 shows an example of frequency bands of WLAN and WWAN in which a second or third harmonic component of a Tx side may affect an Rx path.

**[Table 2]**

| Band | Channel Frequency range | Rx/Tx | Victim/A ggressor | Band | Channel Frequency range | Rx/Tx | Victim/A ggressor |
|---|---|---|---|---|---|---|---|
| WLAN 5G | 5150-5240 | Rx/Tx | Victim | LTE B38 | 2575-2620 | Tx | Aggressor |
| WLAN 5G | 5150-5380 | Rx/Tx | Victim | LTE B41 | 2575-2690 | Tx | Aggressor |
| WLAN 5G | 5760-5850 | Rx/Tx | Victim | LTE B1 | 1920-1950 | Tx | Aggressor |
| WLAN 5G | 5790-5850 | Tx | Aggressor | LTE B2 | 1930-1950 | Rx | Victim |

According to one embodiment, during simultaneous operation of WWAN and WLAN through adjacent antennas with respect to each other, performance degradation of an Rx path may occur. For example, with reference to FIG. 6, the electronic device 600 may receive a WLAN 2.4G signal using a Sub 2 antenna and a Sub 4 antenna, and may output an LTE B40 signal through a Sub 5 antenna and a Main 2 antenna. Here, WLAN 2.4GHz includes channels between 2.4GHz to 2.4835GHz, and LTE B40 includes a 2.3GHz to 2.4GHz band, thereby a frequency band may be adjacent (or at least partially overlapped). In this case, when outputting an LTE B40 signal in a state in which the Sub 2 antenna and/or the Sub 4 antenna and the Sub 5 antenna and/or the Main 2 antenna are adjacent, performance degradation such as component (i.e., part) damage and/or Rx BLER increase may occur in an Rx path receiving the WLAN 2.4G signal. Table 3 and Table 4 show a deviation of reception performance of a WLAN signal of the Sub 4 antenna and the Sub 2 antenna in a case in which a WWAN signal is not output from the Sub 5 antenna of FIG. 6 and in a case in which the WWAN signal is output with a maximum intensity (e.g., 23dBm to 24dBm).

**[Table 3]**

| Sub 5 | Sub 4 measured value | Tx output status | | Deviation |
|---|---|---|---|---|
| | | Free | With Tx | |
| | (dBm) | | | |
| LTE B40 | TRP | 12.6 | 13.5 | 0.9 |
| | TIS | 83.8 | 52.0 | 31.8 |

**[Table 4]**

| Sub 5 | Sub 2 measured value | Tx output status | | Deviation |
|---|---|---|---|---|
| | | Free | With Tx | |
| | (dBm) | | | |
| LTE B40 | TRP | 4.9 | 5.6 | 0.9 |
| | TIS | 77.6 | 57.4 | 20.2 |

| | | | | |
|---|---|---|---|---|
| (TRP: total radiated power, TIS: total isotropic sensitivity) | | | | |

With reference to the Table 3 and the Table 4, a deviation between a case (free) in which a WWAN signal is not output in the Sub 5 antenna of TIS indicating a reception performance difference and a case (with Tx) in which the WWAN signal is output may be measured as 31.8dBm in the Sub 4 antenna and 20.2 dBm in the Sub 2 antenna. That is, it may be confirmed that a degradation of reception performance according to signal output of the Sub 5 antenna is larger in the Sub 4 antenna closer relatively to the Sub 5 antenna.

According to one embodiment, the electronic device 600, as a foldable type electronic device 600, may be folded or unfolded according to a user operation. As illustrated in FIG. 6, since antennas of the electronic device 600 may be respectively disposed on the first housing 610 (or an upper main body) and the second housing 620 (or a lower main body), a distance between some antennas may vary according to a change in state of the electronic device 600. For example, when the electronic device 600 is in an unfolded state as FIG. 6 (a), the Sub 5 antenna is adjacent to the Sub 4 antenna and the Sub 2 antenna disposed on the same the first housing 610, however, the Main 2 antenna disposed on the second housing 620 may be spaced apart by a predetermined distance from the Sub 4 antenna and the Sub 2 antenna disposed on the first housing 610. In contrast, when the electronic device 600 is in a folded state as FIG. 6 (b), the Main 2 antenna disposed on the second housing 620 and the Sub 2 antenna disposed on the first housing 610 may become close. As such, since the distance between antennas may vary according to a change in state of the electronic device 600, an influence on an opponent RF path during simultaneous operation of WWAN and WLAN may vary.

An arrangement structure of antennas illustrated in FIG. 6, a frequency band used in each antenna, and wireless communication type are merely one embodiment for describing the invention, and various embodiments of this document are not limited thereto.

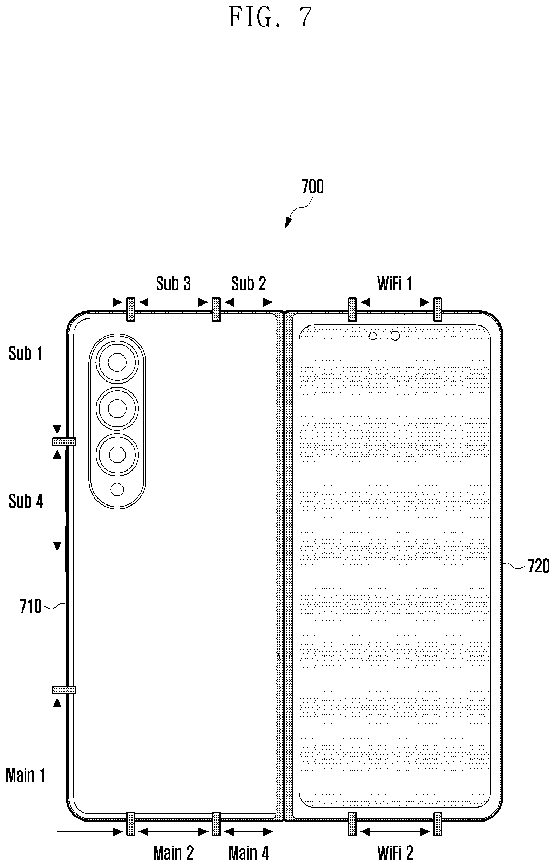

FIG. 7 illustrates antennas disposed in a foldable type electronic device foldable left and right according to one embodiment.

According to one embodiment, the electronic device 700 may be a foldable type electronic device (e.g., the electronic device 200 of FIG. 2A to FIG. 2D) foldable left and right about a folding axis in a vertical direction (e.g., the folding axis A of FIG. 2A to FIG. 2D).

According to one embodiment, according to one embodiment, the electronic device 700 may include a first housing 710 (e.g., the first housing 210 of FIG. 2A to FIG. 2D) and a second housing 720 (e.g., the second housing 220 of FIG. 2A to FIG. 2D) rotatably coupled with the first housing 710 through a hinge structure. According to one embodiment, at least one antenna may be disposed on the first housing 710 corresponding to a left main body, and at least one antenna may be disposed on the second housing 720 corresponding to a right main body.

According to one embodiment, the electronic device 700 supports various wireless communication type such as WLAN (or Wi-Fi) and WWAN (e.g., 4G LTE, 5G NR), and a frequency band of wireless communication used in the electronic device 700 may also be various. Accordingly, the electronic device 700 may include a plurality of antennas in order to support wireless communication of various frequency bands. With reference to FIG. 7, a Sub 1 antenna, a Sub 2 antenna, a Sub 3 antenna, a Sub 4 antenna, a Main 1 antenna, a Main 2 antenna, and a Main 4 antenna may be disposed on the first housing 710, and a Wi-Fi 1 antenna and a Wi-Fi 2 antenna may be disposed on the second housing 720. Here, antennas disposed on the first housing 710 may transmit and receive a WWAN signal, and antennas disposed on the second housing 720 may transmit and receive a WLAN signal.

According to one embodiment, the electronic device 700 may be folded or unfolded according to a user operation. When the electronic device 700 is in an unfolded state as FIG. 7, a distance between antennas disposed on the first housing 710 and antennas disposed on the second housing 720 may be far. Different from this, when the electronic device 700 becomes in a folded state, some among antennas disposed on the first housing 710 and antennas disposed on the second housing 720 may become close with respect to each other. For example, a Sub 3 antenna disposed in an upper center of the first housing 710 and a Wi-Fi 1 antenna disposed in an upper center of the second housing 720 are spaced apart by a predetermined distance when the electronic device 700 is in an unfolded state, however, may become close with respect to each other when the electronic device 700 is changed to a folded state. Also, a Main 2 antenna disposed in a lower center of the first housing 710 and a Wi-Fi 2 antenna disposed in a lower center of the second housing 720 are spaced apart by a predetermined distance when the electronic device 700 is in an unfolded state, however, may become close with respect to each other when the electronic device 700 is changed to a folded state.

Accordingly, when the electronic device 700 is in a folded state, when the Sub 3 antenna transmits and receives a WWAN signal of an adjacent frequency band to a WLAN signal received in the Wi-Fi 1 antenna, the Sub 3 antenna may affect reception performance of the Wi-Fi 1 antenna, and, when the Main 2 antenna transmits and receives a WWAN signal of an adjacent frequency band to a WLAN signal received in the Wi-Fi 2 antenna, the Main 2 antenna may affect reception performance of the Wi-Fi 2 antenna.

An arrangement structure of antennas illustrated in FIG. 7, a frequency band used in each antenna, and wireless communication type are merely one embodiment for describing the invention, and various embodiments of this document are not limited thereto.

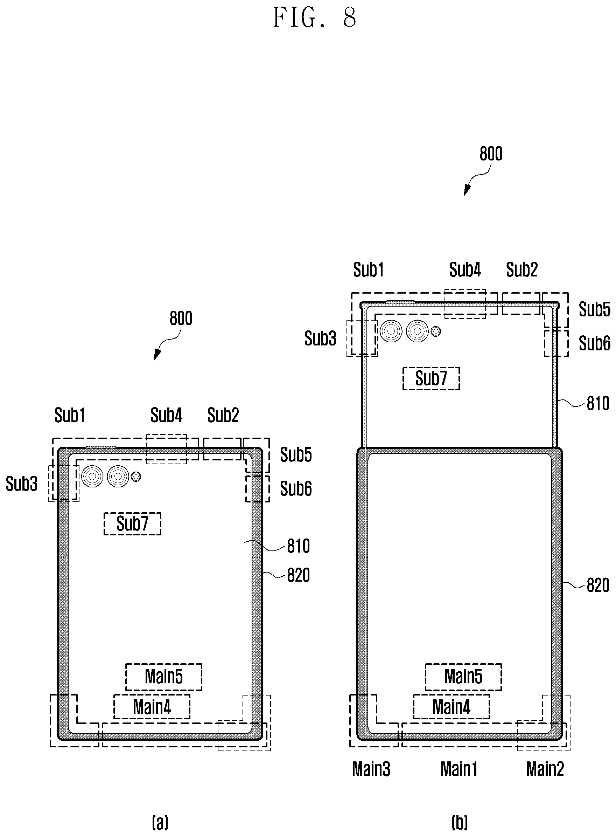

FIG. 8 illustrates antennas disposed in a slidable type electronic device 800 expandable in a vertical direction according to one embodiment.

According to one embodiment, the electronic device 800 may be a slidable type electronic device 800 expandable in a vertical direction (e.g., the electronic device 500 of FIG. 5A and FIG. 5B).

According to one embodiment, the electronic device 800 may include a first housing part 820, a second housing part 810 movably coupled within a designated direction and within a designated distance from the first housing part 820, and a display (or flexible display, expandable display, stretchable display) disposed to be supported through at least a part of the first housing part 820 and the second housing part 810. The display may have a size of an area visible at a front surface be changed as the second housing part 810 is moved from the first housing part 820.

According to one embodiment, at least one antenna may be disposed on the first housing part 820 of the electronic device 800, and at least one antenna may be disposed on the second housing part 810. According to one embodiment, the electronic device 800 supports various wireless communication type such as WLAN (or Wi-Fi) and WWAN (e.g., 4G LTE, 5G NR), and a frequency band of wireless communication used in the electronic device 800 may also be various. Accordingly, the electronic device 800 may include a plurality of antennas in order to support wireless communication of various frequency bands.

With reference to FIG. 8, a Main 1 antenna, a Main 2 antenna, a Main 3 antenna, a Main 4 antenna, and a Main 5 antenna may be disposed on the first housing part 820, and a Sub 1 antenna, a Sub 2 antenna, a Sub 3 antenna, a Sub 4 antenna, a Sub 5 antenna, a Sub 6 antenna, and a Sub 7 antenna may be disposed on the second housing part 810. Here, at least some among the antennas may transmit and/or receive a WWAN (e.g., 4G LTE, 5G NR) signal, at least some other antennas may transmit and/or receive a WLAN (or Wi-Fi) signal, and at least some further antennas may transmit and/or receive both a WWAN signal and a WLAN signal.

According to one embodiment, the second housing part 810 may be moved upward from the first housing part 820, and, accordingly, a distance between antennas disposed on the first housing part 820 and antennas disposed on the second housing part 810 may be changed. In a state (or a slide-in state) in which the second housing part 810 is inserted into the first housing part 820 as FIG. 8 (a), a distance between antennas disposed on the first housing part 820 and antennas disposed on the second housing part 810 is relatively close, and, in a state (or a slide-out state) in which the second housing part 810 is separated from the first housing part 820 as FIG. 8 (b), a distance between antennas disposed on the first housing part 820 and antennas disposed on the second housing part 810 may be relatively far. As such, the distance between antennas may be changed according to a state of the electronic device 800, and, during simultaneous operation of WWAN and WLAN, an influence on an Rx path of another one according to signal output of any one may also be different.

An arrangement structure of antennas illustrated in FIG. 8, a frequency band used in each antenna, and wireless communication type are merely one embodiment for describing the invention, and various embodiments of this document are not limited thereto.

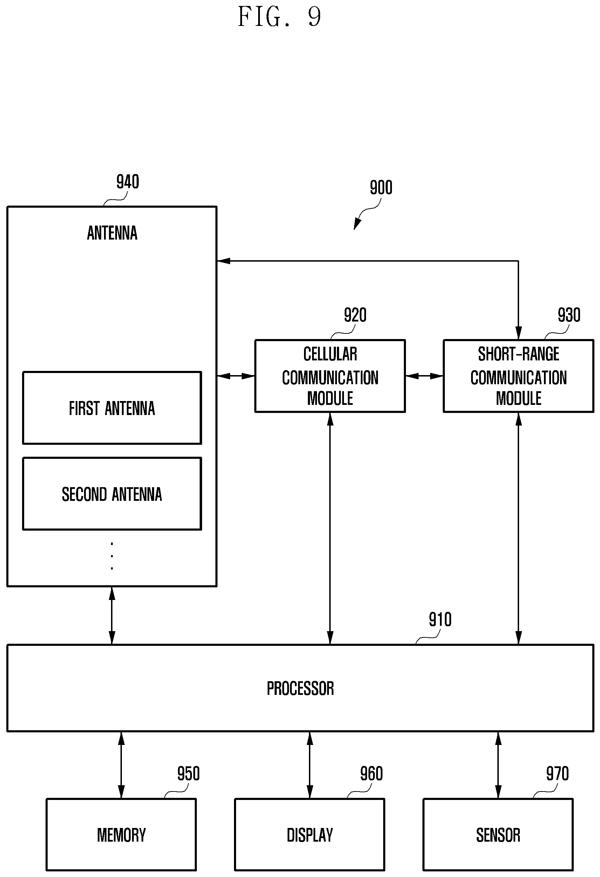

FIG. 9 is a block diagram of an electronic device according to one embodiment.

According to one embodiment, the electronic device 900 may include at least one antenna 940, a cellular communication module 920, a short-range communication module 930, a display 960, a sensor 970, a processor 910, and a memory 950, and, even when some among illustrated configurations are omitted and/or replaced with other configurations, various embodiments of this document may be implemented.

According to one embodiment, the electronic device 900 may be a foldable type electronic device. The foldable type electronic device includes a first housing and a second housing, and the first housing and the second housing may be connected to be rotatable with respect to each other through a hinge structure disposed therebetween. For example, the electronic device 900 may include a foldable structure (e.g., a foldable structure of the electronic device 200 of FIG. 2A to FIG. 2D, a foldable structure of the electronic device 700 of FIG. 7) foldable left and right about a folding axis in a vertical direction (e.g., the folding axis A of FIG. 2A to FIG. 2D), or may include a foldable structure (e.g., the electronic device 300 of FIG. 3A to FIG. 3E, a foldable structure of the electronic device 600 of FIG. 6) foldable up and down about a folding axis in a horizontal direction (e.g., the folding axis A of FIG. 3A to FIG. 3E).

According to another one embodiment, the electronic device 900 may be a slidable type (or foldable type) electronic device. The slidable type electronic device 900 includes a first housing part and a second housing part, and the second housing part may be movably coupled from the first housing part within a designated direction and a designated distance. For example, the electronic device 900 may include a structure (e.g., the electronic device 500 of FIG. 5A and FIG. 5B) in which the second housing moves in a vertical direction so that a display area may be expanded, or may include a structure (e.g., the electronic device 400 of FIG. 4A to FIG. 4D) in which the second housing moves in a horizontal direction so that a display area may be expanded.

Hereinafter, description is made based on the electronic device 900 including a foldable structure that is foldable up and down (e.g., the electronic device 300 of FIG. 3A to FIG. 3E, a foldable structure of the electronic device 600 of FIG. 6), however, various embodiments of this document may also be applied to the electronic device 900 having a different form factor.

According to one embodiment, the display 960 may display image data provided from the processor 910. The display 960 may include a display panel (not illustrated) in which a plurality of pixels are formed and a display driving circuit (not illustrated) for driving the display panel (not illustrated). Also, the display 960 may include a touchscreen capable of detecting a user touch input or a hovering input. The display 960 may be configured as an organic light emitting diode (OLED) display, however, the configuration is not limited thereto. The display 960 may include at least a part among a configuration and/or a function of a display module 160 of FIG. 1.

According to one embodiment, the display 960 may be implemented as a flexible display in which at least a partial area is flexible, and/or bendable, and a display area exposed to the outside and displaying image information may be changed. For example, when the electronic device 900 is implemented as a foldable type electronic device (e.g., the electronic device 200 of FIG. 3A to FIG. 3D), the display 960 (e.g., the flexible display 390 of FIG. 3A) is not exposed to the outside in a folding state so that a whole of the display 960 may be deactivated, and a whole area of the display 960 is exposed to the outside in an unfolding state so that image information may be displayed.

According to one embodiment, the electronic device 900 may include at least one sensor 970 collecting various information. According to one embodiment, the electronic device 900 may include a folding detection sensor detecting a folding angle of the electronic device 900, that is, an angle between the first housing (e.g., the first housing 310 of FIG. 3A to FIG. 3D) and the second housing (e.g., the second housing 320 of FIG. 3A to FIG. 3D) or an angle between a first area (e.g., a first area 330a of FIG. 3A to FIG. 3D) and a second area (e.g., a second area 330b of FIG. 3A to FIG. 3D) of the display 960. According to one embodiment, an electronic device may further include at least one of a gesture sensor, a gyro sensor, a barometer sensor, a magnetic sensor, an acceleration sensor, a grip sensor, a proximity sensor, a color sensor, an IR (infrared) sensor, a bio sensor, a temperature sensor, a humidity sensor, or an illuminance sensor.

According to one embodiment, the electronic device 900 may support various wireless communication type. For example, the electronic device 900 may support the wireless wide area network (WWAN) communication (or cellular communication) such as 4G LTE (long term evolution) and 5G NR (new radio), and the wireless local area network (WLAN) communication (or Wi-Fi) defined in IEEE 802.11.

According to one embodiment, the cellular communication module 920 may perform various operations such as support of establishment of a communication channel related to cellular communication (or WWAN) and support of performing communication through an established communication channel. For example, the cellular communication module 920 may include a communication processor performing a control operation such as encoding and decoding of data related to cellular wireless communication (e.g., 4G LTE, 5G NR) and processing of a communication protocol, a transceiver modulating and demodulating a signal, and/or an RF front end module performing a function such as amplification of a signal, filtering, and antenna matching. According to one embodiment, the cellular communication module 920 may be configured as at least one chip independent from the processor 910 to be described later, or at least a part among operations of the cellular communication module 920 may be performed by the processor 910 or a communication processor.

According to one embodiment, the short-range communication module 930 may perform various operations related to short-range wireless communication (e.g., WLAN, Bluetooth, UWB, Zigbee). For example, the short-range communication module 930 may include a communication processor performing a control operation such as encoding and decoding of data related to WLAN communication or Bluetooth communication and processing of a communication protocol, a transceiver modulating and demodulating a signal, and/or an RF front end module performing a function such as amplification of a signal, filtering, and antenna matching. According to one embodiment, the short-range communication module 930 may include separate communication processors and transceivers respectively processing WLAN and Bluetooth communication, or operations related to WLAN and Bluetooth communication may be performed in one communication processor and transceiver. According to one embodiment, the short-range communication module 930 may be configured as at least one chip independent from the processor 910 to be described later, or at least a part among operations of the short-range communication module 930 may be performed by the processor 910 or a communication processor.

According to one embodiment, the electronic device 900 may include a plurality of antennas 940 for transmitting and receiving a signal of an RF band. Each antenna 940 may be used for transmitting a signal of a designated frequency band, for receiving a signal of the determined frequency band, or for both transmitting and receiving.

According to one embodiment, the electronic device 900 may include at least one antenna disposed on the first housing and at least one antenna disposed on the second housing. For example, when the electronic device 900 is implemented as a foldable type as FIG. 3A to FIG. 3D, as described through FIG. 6, the electronic device 900 may include Main 1 antenna, Main 2 antenna, Main 3 antenna disposed on the second housing (or a lower main body), and Sub 1 antenna, Sub 2 antenna, Sub 3 antenna, Sub 4 antenna, Sub 5 antenna, and Sub 6 antenna disposed on the first housing (or an upper main body).

According to one embodiment, each antenna 940 may transmit and/or receive a signal of at least one wireless communication type in a determined frequency band. For example, in case of antennas disposed in a foldable type electronic device 900 of FIG. 6, Main 1 antenna disposed on the second housing (or the lower main body) supports a low-frequency band of WWAN (e.g., LTE B5, NR n28) and a mid-frequency band (e.g., LTE B1), Main 2 antenna supports a high-frequency band of WWAN (e.g., LTE B40), and Main 3 antenna may support a mid-frequency band (e.g., NR n77, n79) and a high-frequency band of WWAN. According to one embodiment, Sub 1 antenna disposed on the first housing (or the upper main body) supports a low-frequency band of WWAN (e.g., LTE B5), Sub 2 antenna supports a high-frequency band of WWAN and 2.4GHz and 5GHz bands of WLAN, Sub 3 antenna supports a low-frequency band and a mid-frequency band of WWAN, Sub 4 antenna supports 2.4GHz and 5GHz bands of WLAN, Sub 5 antenna supports a mid-frequency band (e.g., LTE B1) and a high-frequency band (e.g., LTE B40, NR n41) of WWAN, and Sub 6 antenna may support a high-frequency band (e.g., NR n79) of WWAN. Each antenna may be used to transmit a signal of a determined frequency band, may be used to receive, or may be used for both transmission and reception.

An arrangement structure of the above-described antennas 940, wireless communication type and frequency band supported by each antenna 940 correspond to one embodiment, and are not limited thereto.

According to one embodiment, the memory 950 may include a known volatile memory and a non-volatile memory. The memory 950 may store various instructions capable of being performed in the processor 910. Such instructions may include control commands of arithmetic and logical operation recognized by the processor 910, data movement, input/output, and the like. The memory 950 may include at least a part among a configuration and/or a function of the memory 130 of FIG. 1, and may store at least a part of the program 140 of FIG. 1.

According to one embodiment, the processor 910, as a configuration capable of performing calculation or data processing regarding control and/or communication of each constituent element of the electronic device 900, may include at least a part of a configuration of the processor 120 of FIG. 1. The processor 910 may be operatively, electrically, and/or functionally connected with an internal constituent element of the electronic device 900 such as a plurality of antennas 940, the display 960, the cellular communication module 920, the short-range communication module 930, the sensor 970, the memory 950, and the like.

An operation and data processing function which the processor 910 may implement in the electronic device 900 will have no limitation, however, in this document, description is made on various control operations of the processor 910 such as antenna switching, time-division operation, and frequency band change for minimizing an influence on an Rx path of the other one according to an output of a signal of one among WWAN and WLAN in a co-existence situation of WWAN and WLAN. An operation of the processor 910 to be described later may be performed as executing instructions stored in the memory 950. At least a part among operations of the processor 910 to be described later may also be performed by a communication processor included in the cellular communication module 920 or the wireless LAN communication module 930 operating independently from the processor 910.

In this document, description that the processor 910 (or the electronic device 900) may perform a certain operation (or a function, a work, a task) may also be interpreted as substantially the same meaning as that an instruction (or a command, a computer program) for allowing the electronic device 900 (or the processor 910) to perform the corresponding operation is stored in the memory 950 (e.g., a non-volatile memory, storage). Also, description that the processor 910 may perform a certain operation may also be interpreted as substantially the same meaning as that at least one unspecified processor may perform the corresponding operation.

According to one embodiment, when transmission or reception of a WLAN signal by the short-range communication module 930 is started, the short-range communication module 930 may transmit, to the processor 910, a notification indicating that transmission or reception of the WLAN signal is started. According to one embodiment, the short-range communication module 930 and the processor 910 may be connected through a determined interface, and the short-range communication module 930 transmits, to the processor 910, a notification or a request related to transmission and reception of the WLAN signal through the interface, and, when being a co-existence situation of WWAN and WLAN, the processor 910 may transmit, to the short-range communication module 930, a notification or a request related thereto through the interface.

According to one embodiment, when transmission or reception of a WWAN signal by the cellular communication module 920 is started, the cellular communication module 920 may transmit, to the processor 910, a notification indicating that transmission or reception of the WWAN signal is started. According to one embodiment, the cellular communication module 920 and the processor 910 may include a plurality of pins usable in exchange of information related to transmission and reception of the WWAN signal. For example, the processor 910 may include a Coex Tx pin for receiving a notification related to start of transmission of the WWAN signal, a Coex Rx pin for transmitting a notification related to start of transmission of the WWAN signal to the cellular communication module 920, a PA mute pin for receiving, from the cellular communication module 920, a request for stopping transmission of the WLAN signal, and/or a PA mute pin for transmitting, to the cellular communication module 920, a request for stopping transmission of the WWAN signal. The cellular communication module 920 may include a plurality of pins connected with each pin of the processor 910. According to another one embodiment, the cellular communication module 920 and the short-range communication module 930 may be connected through an interface for transmitting and receiving a notification related to start and/or stop of the WWAN signal and the WLAN signal.

According to one embodiment, when a co-existence situation occurs in which transmission and reception of the WWAN signal and the WLAN signal having frequency bands adjacent to each other or at least partially overlapping occur simultaneously, transmission of one signal may influence a reception path of the other signal. For example, an LTE B40 band among WWAN and a 2.4GHz band of WLAN are frequency bands adjacent to each other, and an NR n79 band among WWAN and a 5GHz band of WLAN may be frequency bands adjacent to each other. In this case, in an Rx path including an antenna receiving a WWAN signal or a WLAN signal, a signal output from an adjacent antenna may be introduced, thereby causing a phenomenon in which an Rx component (i.e., part) (e.g., LNA (low noise amplifier)) is damaged and/or Rx BLER (block error rate) becomes large. More specifically, when WWAN and WLAN operate simultaneously, due to a neighboring frequency, an n-th harmonic component, a frequency difference between Tx, and the like, a WWAN output signal may give performance degradation to a WLAN Rx path, or a WLAN output signal may give performance degradation to a WWAN Rx path.

An influence on a Rx side (or victim) according to signal output of a Tx side (or aggressor) as described above may increase as a distance between a Tx antenna and a Rx antenna becomes closer. Since a distance between antennas disposed in the electronic device 900 may vary in a folding state and an unfolding state of the electronic device 900, the processor 910 may perform a control operation such as antenna switching, time-division operation, and/or frequency band change based on a state of the electronic device 900 when a co-existence situation of WWAN and WLAN occurs.

Hereinafter, one among the cellular communication module 920 and the short-range communication module 930 may be referred to as a first communication module, and a remaining one may be referred to as a second communication module, and one among a WWAN signal and a WLAN signal may be referred to as a first signal, and a remaining one may be referred to as a second signal. Also, hereinafter, an operation of the processor 910 (or a communication processor) is described with respect to simultaneous operation of a WWAN signal and a WLAN signal, however, various embodiments may also be applied to simultaneous operation of a WWAN signal and a Bluetooth signal controlled by the short-range communication module 930.

According to one embodiment, the processor 910 may identify that transmission of the first signal (e.g., a WWAN signal or a WLAN signal) of a first frequency band through the first communication module (e.g., the cellular communication module 920 or the short-range communication module 930) is started, and may identify that reception of the second signal (e.g., a WLAN signal or a WWAN signal) of a second frequency band through the second communication module (e.g., the short-range communication module 930 or the cellular communication module 920) is started at least partially simultaneously with transmission of the first signal. Here, the first frequency band and the second frequency band may be adjacent to each other, or may at least partially overlap. For example, the first signal and the second signal may be a WWAN signal and a WLAN signal of frequency bands adjacent to each other or at least partially overlapping such as an LTE B40 signal and a Wi-Fi 2.4GHz signal.

According to one embodiment, the processor 910 may determine a state of the electronic device 900 based on an angle between the first housing and the second housing. For example, the processor 910 may identify an angle between the first housing and the second housing (or an angle between a first area of the display 960 and a second area) by using a folding detection sensor, and may detect whether the electronic device 900 is in a folding state or in an unfolding state based on a detected angle.

According to one embodiment, in case of a folding state or an unfolding state, a distance between an antenna outputting the first signal and an antenna receiving the second signal may vary. For example, when an antenna structure of FIG. 6 is taken as an example, the electronic device 900 may output an LTE B40 signal through a Sub 5 antenna disposed on the first housing and a Main 2 antenna disposed on the second housing, and may receive a Wi-Fi 2.4GHz signal through a Sub 2 antenna and a Sub 4 antenna disposed on the first housing. In case that the electronic device 900 is in an unfolding state as FIG. 6 (a), the Sub 5 antenna is adjacent to the Sub 4 antenna and the Sub 2 antenna disposed on the same first housing, however, the Main 2 antenna disposed on the second housing may be spaced apart from the Sub 4 antenna and the Sub 2 antenna disposed on the first housing by a predetermined distance. In contrast, in case that the electronic device 900 is in a folding state as FIG. 6 (b), the Main 2 antenna disposed on the second housing and the Sub 2 antenna disposed on the first housing may be adjacent.

According to one embodiment, the processor 910 may determine at least one antenna to be used for transmitting the first signal and at least one antenna to be used for receiving the second signal based on a state (e.g., a folding state or an unfolding state) of the electronic device 900. According to one embodiment, the electronic device 900 may store, in the memory 950 in a table form, an index of an antenna and an RF path to be used in each wireless communication type and frequency band. A table stored in the memory 950 may store, by mapping, antenna information and RF path information to be used in signal transmission for each of a folding state and an unfolding state of the electronic device 900. According to one embodiment, the processor 910 may identify, in the table stored in the memory 950, an antenna index corresponding to a current state (e.g., an unfolding state, a folding state) of the electronic device 900 and a used wireless communication type and frequency band.

According to one embodiment, when a state of the electronic device 900 is an unfolding state, in a co-existence situation of WWAN and WLAN, the processor 910 may switch an antenna to be used for output of the first signal. According to one embodiment, the processor 910 may control output of the first signal by using at least one antenna disposed on the first housing, and reception of the second signal by using at least one antenna disposed on the second housing. According to one embodiment, the first signal may be transmitted through a second antenna and a third antenna, and the second signal may be received through a first antenna, and, when a state of the electronic device 900 is an unfolding state, in a co-existence situation of WWAN and WLAN, the processor 910 may control, while receiving the second signal through the first antenna, to stop output (i.e., transmission) of the first signal using the second antenna and to output the first signal using the third antenna.

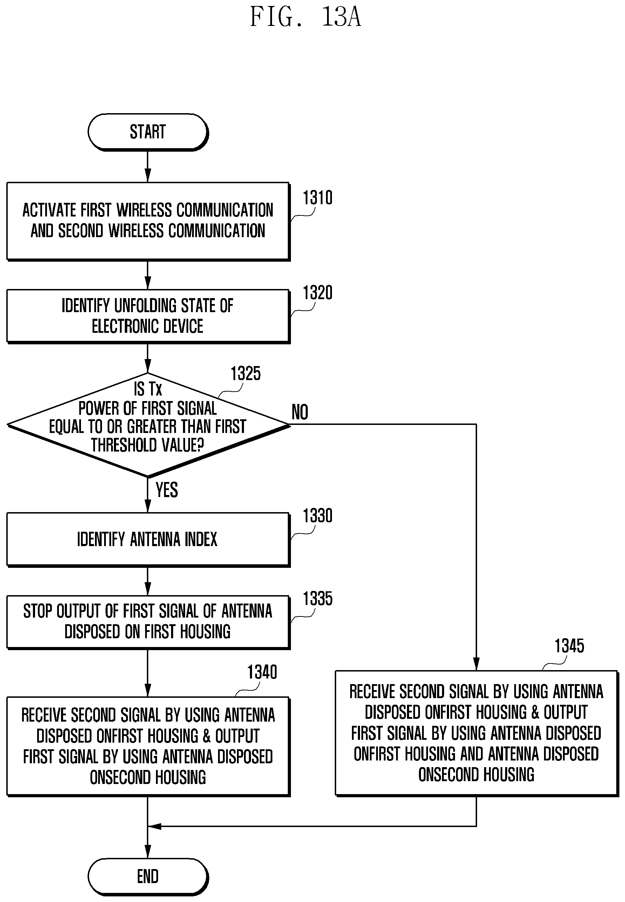

For example, when the electronic device 900 is configured to output a WWAN signal (e.g., an LTE B40 signal) through the Sub 5 antenna disposed on the first housing and the Main 2 antenna disposed on the second housing as in FIG. 6, and to receive a WLAN signal (e.g., a Wi-Fi 2.4GHz signal) through the Sub 2 antenna and the Sub 4 antenna disposed on the first housing, in a co-existence situation of WWAN and WLAN, the electronic device 900 may stop reception of the WWAN signal using the Sub 5 antenna disposed on the first housing, and may receive the WLAN signal by using only the Main 2 antenna disposed on the second housing. In the above example, since the Sub 5 antenna is adjacent to the Sub 4 antenna receiving the WLAN signal, output of the WWAN signal using the Sub 5 antenna is stopped, however, in case of the Main 2 antenna, since a distance from the Sub 2 antenna and the Sub 4 antenna is far in an unfolding state of the electronic device 900 and there is no influence by co-existence, output of the WWAN signal through the Main 2 antenna may be maintained as it is. The above example corresponds to one embodiment, and, when an antenna configuration of the electronic device 900 is different from the example of FIG. 6 described above, in an unfolding state, the processor 910 may reduce an influence by co-existence by outputting a signal by using only an antenna disposed on a different housing and having a far distance from a Rx antenna. This embodiment will be described in more detail through FIG. 13A.

According to one embodiment, the first communication module (e.g., the cellular communication module 920) may transmit, to the second communication module (e.g., the short-range communication module 930), a first notification indicating output of a first signal when output of the first signal (e.g., the LTE B40 signal) is started. The second communication module may transmit (or send), to the first communication module, a second notification including information on whether reception of a second signal is performed when the first notification is received. For example, the first communication module may transmit the first notification to the processor 910 when output of the first signal is started, and the processor 910 may, in response to reception of the first notification, identify, through the second communication module, that reception of the second signal (e.g., a Wi-Fi 2.4GHz signal) is in progress, and may transmit, to the first communication module, the second notification indicating that reception of the second signal is in progress. Alternatively, the first communication module and the second communication module may transmit and receive the first notification and the second notification through an interface formed between the first communication module and the second communication module, without passing through the processor 910. Here, the second notification may include information of an antenna (e.g., a Sub 5 antenna) among a plurality of antennas (e.g., a Sub 5 antenna and a Main 2 antenna) capable of outputting the first signal, for which output of the first signal is to be stopped according to simultaneous reception of the second signal.

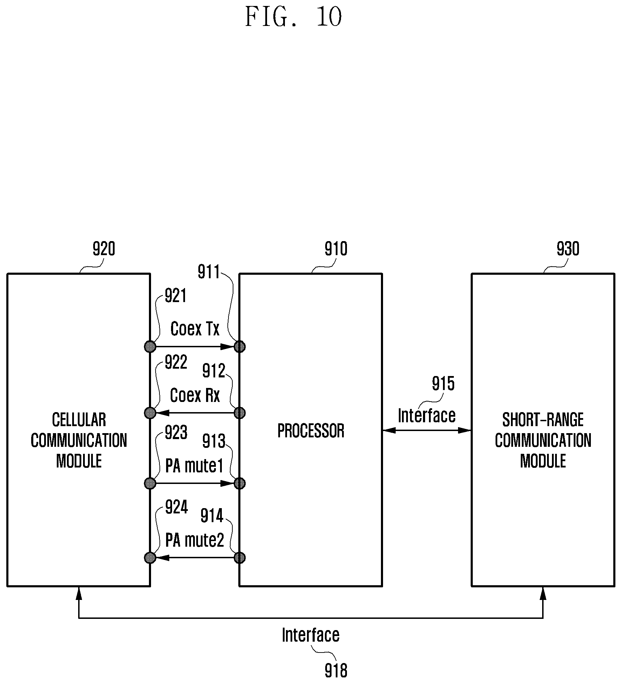

According to one embodiment, the processor 910 may communicate with the cellular communication module 920 through a determined pin to share a co-existence situation. This embodiment will be described in more detail through FIG. 10.

According to one embodiment, the processor 910 may compare an output intensity (or power) of the first signal with a first reference value, and may control the first communication module to stop output (i.e., transmission) of the first signal using a second antenna (e.g., the Sub 5 antenna of FIG. 6) and to output the first signal using a third antenna (e.g., the Main 2 antenna of FIG. 6) when the output intensity of the first signal (e.g., the LTE B40 signal) is equal to or greater than the reference value. The first communication module may, in response to a control command of the processor 910, stop output of the first signal using the second antenna. Here, the first reference value may be an intensity to a degree that an output signal of an antenna disposed on the first housing (e.g., the first housing 610 of FIG. 6, the first housing 710 of FIG. 7) may affect performance of a reception path of an antenna disposed on the second housing (e.g., the second housing 620 of FIG. 6, the second housing 720 of FIG. 7) when the electronic device 900 is in the unfolding state, and, for example, may be configured to about -20 dBm, however, embodiments are not limited thereto, and the first reference value may be determined by variables such as a disposed position and/or a distance, an RF path, and a type/attribute of an antenna, of a first wireless communication and a second wireless communication.

According to one embodiment, when the output intensity of the first signal is less than the first reference value, the processor 910 may control, as in a non-co-existence situation, to receive the second signal by using an antenna disposed on the first housing, and, at least partially simultaneously with the reception, to output the first signal by using at least one among an antenna disposed on the first housing and an antenna disposed on the second housing. For example, the electronic device 900 may operate an antenna at a low power (e.g., -40 dBm to -20 dBm) when transmitting only a signal of PUCCH (physical uplink control channel) in a strong electric field area, and, in this case, output of the Sub 5 antenna disposed on the first housing may not affect an Rx path of the Sub 4 antenna and the Sub 2 antenna disposed on the first housing. Accordingly, when Tx power of the first signal is low as less than a first reference value, the electronic device 900 may operate an antenna, as in a non-co-existence situation, even in a co-existence situation of the first wireless communication and the second wireless communication.

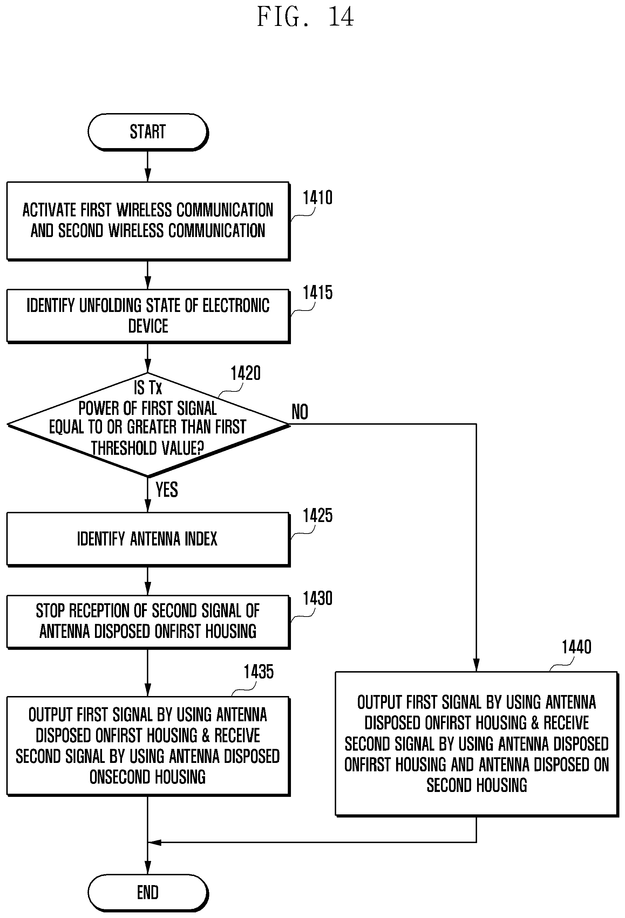

According to one embodiment, the first signal may be transmitted through a fourth antenna disposed on the first housing, and the second signal may be received through a fifth antenna disposed on the first housing and a sixth antenna disposed on the second housing. According to one embodiment, when a state of the electronic device 900 is the unfolding state, in a co-existence situation of WWAN and WLAN, the processor 910 may switch an antenna to be used for receiving the second signal. When a state of the electronic device 900 is the unfolding state, in a co-existence situation of WWAN and WLAN, the processor 910 may control a first wireless communication module to stop reception of the second signal using the fifth antenna and to receive the second signal using the sixth antenna while outputting the first signal through the fourth antenna. For example, the electronic device 900 may control to maintain 2 Rx by turning on MIMO PRx configured by an antenna of the second housing for reception of the second signal. Alternatively, the electronic device 900 may control to receive the second signal by additionally using, in co-existence, an antenna among antennas disposed on the second housing that had not been used for receiving the second signal before co-existence of the first wireless communication and the second wireless communication. This embodiment will be described in more detail through FIG. 14.

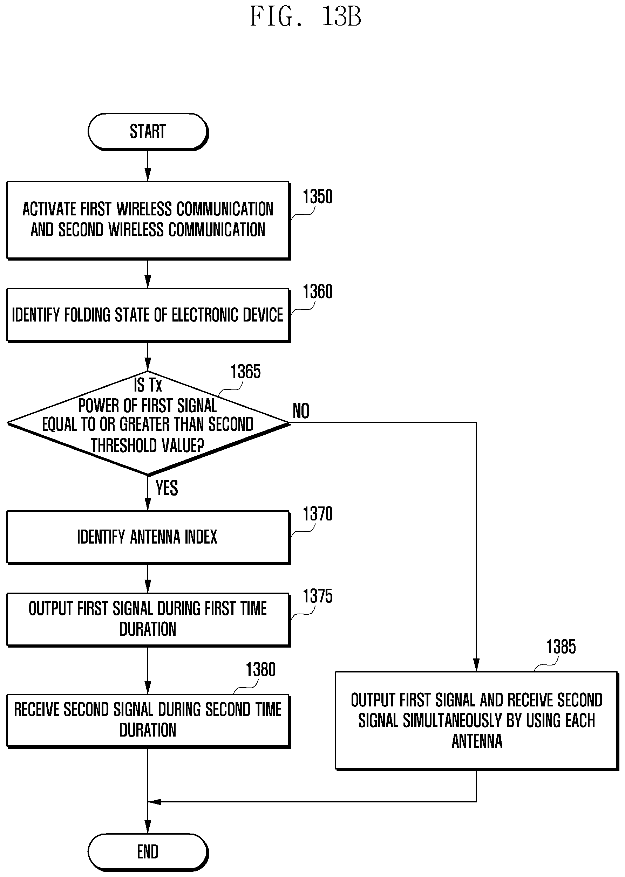

According to one embodiment, when a state of the electronic device 900 is a folding state, in one period composed of a first time duration and a second time duration, the processor 910 may control the first communication module and the second communication module to output the first signal by using at least one antenna during at least part of the first time duration, and to receive the second signal by using another at least one antenna during at least part of the second time duration. For example, in the electronic device 900 having an antenna structure of FIG. 6, when the electronic device 900 is in the folding state, unlike the unfolding state, a distance between the Sub 2 antenna disposed on the first housing used for output of a WWAN signal and the Main 2 antenna disposed on the second housing may be close. Accordingly, when outputting the first signal by using the Sub 2 antenna disposed on the first housing as in the unfolding state, in the folding state, the first signal may be introduced into the Main 2 antenna and may affect an Rx path. Accordingly, the processor 910 may divide a time domain and may alternately progress output of the first signal and reception of the second signal. This embodiment will be described in more detail through FIG. 13B.

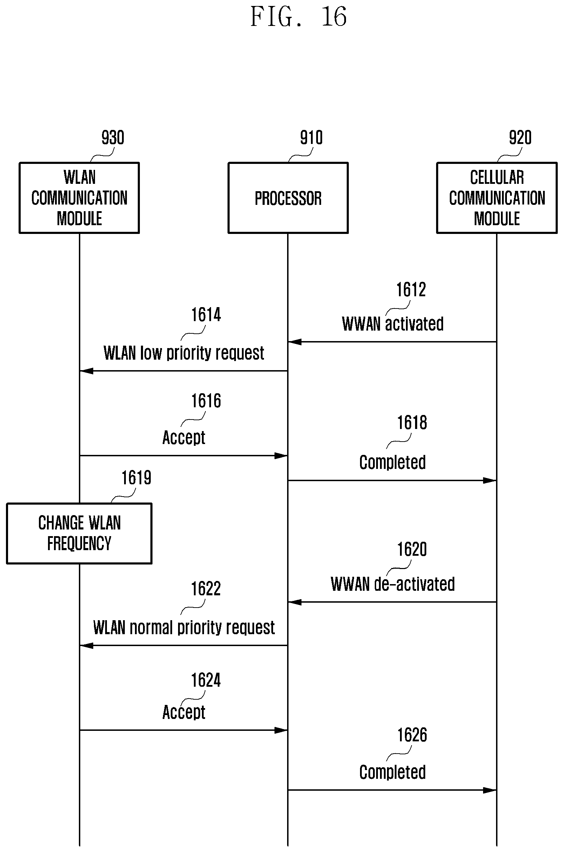

According to one embodiment, the processor 910 may control the short-range communication module 930 to change a frequency band of a WLAN signal in a co-existence situation of WWAN and WLAN. For example, a WLAN signal may be transmitted and received in a 2.4GHz band and/or a 5GHz band, and, in a co-existence situation with WWAN, transmission and reception through a frequency band adjacent to or at least partially overlapping a frequency band of a WWAN signal may be stopped, and a WLAN signal may be transmitted and received by using another frequency band. According to one embodiment, in a case of WWAN (e.g., 4G LTE, 5G NR), when the electronic device 900 becomes an RRC connected state after accessing a network through RACH (random access channel), the electronic device 900 may not select a serving band by itself. In contrast, in a case of WLAN, because the electronic device 900 may select, by itself, a frequency band to be used for transmission and reception of a WLAN signal in a state connectable with a plurality of frequency bands, the processor 910 may control to change a frequency band of WLAN in a co-existence situation of WWAN and WLAN. This embodiment will be described in more detail through FIG. 16.

According to one embodiment, when a voice call using WLAN (e.g., VoWiFi) is being performed, the processor 910 may control the short-range communication module 930 to stop transmission of a WWAN signal. Accordingly, a stable call may be enabled in a co-existence situation of WWAN and WLAN.

FIG. 10 is a block diagram of the electronic device according to one embodiment.

According to one embodiment, the processor 910 (e.g., the processor 910 of FIG. 9) may be operatively connected with the cellular communication module 920 (e.g., the cellular communication module 920 of FIG. 9) controlling transmission and reception of a WWAN signal and the short-range communication module 930 (e.g., the short-range communication module 930 of FIG. 9) controlling transmission and reception of a WLAN signal (or a Bluetooth signal, a UWB signal, a Zigbee signal).

According to one embodiment, the processor 910 may communicate with the cellular communication module 920 through determined pins 911, 912, 913, and 914 to share a co-existence situation of WWAN and WLAN. With reference to FIG. 10, the processor 910 may include a first pin 911, a second pin 912, a third pin 913, and a fourth pin 914 for communication with the cellular communication module 920. The processor 910 may receive, via the first pin 911, a notification or a request related to transmission and reception of a WWAN signal, may transmit, via the second pin 912, a notification or a request related to transmission and reception of a WLAN signal, may receive, via the third pin 913, a Tx stop request (or PA mute 1) of a WLAN signal from the cellular communication module 920, and/or may transmit, via the fourth pin 914, a Tx stop request (or PA mute 2) of a WWAN signal to the cellular communication module 920. The cellular communication module 920 may include pins 921, 922, 923, and 924 connected with respective pins 911, 912, 913, and 914 of the processor 910. According to one embodiment, the cellular communication module 920 and the short-range communication module 930 may be connected through a separate interface 918 not passing through the processor 910.

According to one embodiment, the processor 910 may be connected with the short-range communication module 930 through a determined interface 915. The short-range communication module 930 may deliver, to the processor 910 through the interface 915, a notification or a request related to transmission and reception of a WLAN signal, and, when being in a co-existence situation of WWAN and WLAN (or bluetooth, UWB, Zigbee), the processor 910 may deliver, to the short-range communication module 930 through the interface 915, a notification or a request related to the co-existence situation.

According to one embodiment, when an electronic device is operating a call using WLAN (e.g., VoWiFi), the processor 910 may receive, from the short-range communication module 930 through the interface 915, a notification related to a WLAN call, and may request, to the cellular communication module 920 through the fourth pin 914, a Tx stop of a WWAN signal. Alternatively, when operating a call using WLAN, the processor 910 may notify the cellular communication module 920 via the second pin 912, and, in this case, the cellular communication module 920 may be configured not to request, to the processor 910, a Tx stop of a WWAN signal.

According to another embodiment, the cellular communication module 920 and the short-range communication module 930 may transmit and receive, through the interface 918 between the cellular communication module 920 and the short-range communication module 930, a notification or a request related to a co-existence situation of WWAN and WLAN (or bluetooth).

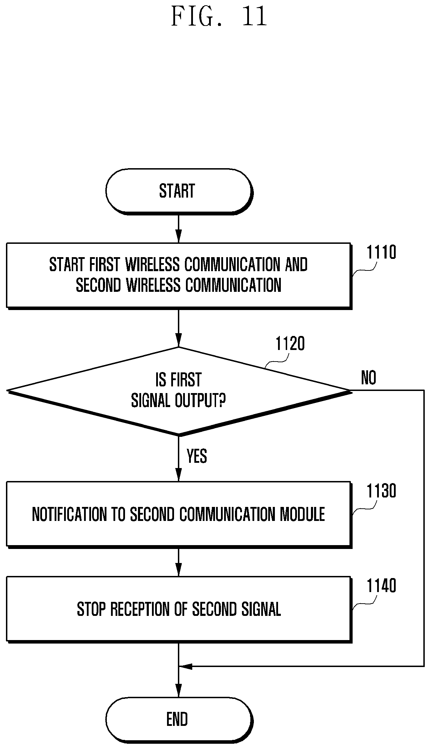

FIG. 11 is a flowchart of a method of controlling a transmission and reception path of a wireless signal of an electronic device according to one embodiment.

A method illustrated in FIG. 11 may be performed by an electronic device (e.g., the electronic device 900 of FIG. 9), and, for technical features described above, description may be omitted below. FIG. 11 describes an embodiment of disabling reception of either one signal in a co-existence situation of WWAN and WLAN, without considering a state of an electronic device (e.g., a folding state or an unfolding state).

According to one embodiment, in operation 1110, an electronic device may start a first wireless communication and a second wireless communication. Here, the first wireless communication may be either one among WWAN and WLAN (or Bluetooth), and the second wireless communication may be the other one. For example, when WWAN communication is started, an electronic device may establish a connection with a cellular wireless communication base station by using a cellular communication module, and, when WLAN communication is started, an electronic device may establish a connection with an adjacent external device by using a short-range communication module. An electronic device may transmit and receive a first signal of a first wireless communication by using at least one antenna, and may transmit and receive a second signal of a second wireless communication by using another at least one antenna, and an antenna used for transmission and reception of the first signal and an antenna used for transmission and reception of the second signal may be adjacent to each other.

According to one embodiment, in operation 1120, the electronic device may identify output of the first signal (e.g., a WWAN signal or a WLAN signal) of the first wireless communication. Because the antenna used for transmission and reception of the first signal and the antenna used for transmission and reception of the second signal are adjacent to each other, output of the first signal may affect an Rx path including the antenna of the second signal.

According to one embodiment, when the first signal is not output, the electronic device may not perform operation 1130 and operation 1140.

According to one embodiment, when the first signal is output, in operation 1130, the electronic device may notify a second communication module that the first signal is output.

According to one embodiment, in operation 1140, the second communication module may stop reception of the second signal. For example, the second communication module may turn off an LNA (low noise amplifier) and/or an RFIC input connected with the LNA, the LNA (low noise amplifier) being connected with at least one antenna adjacent to the antenna used for transmitting the first signal among a plurality of antennas used for receiving the second signal.

As described above, in an embodiment of FIG. 11, when the first wireless communication is activated, operation may stop reception of the second wireless communication. When the electronic device is a foldable type or a slidable type, a distance between an antenna used for the first wireless communication and an antenna used for the second wireless communication may be changed, and, even in a case in which transmission of the first signal does not affect reception of the second signal such as a case in which the electronic device is in an unfolding state, according to an embodiment of FIG. 11, reception of the second signal may be stopped.

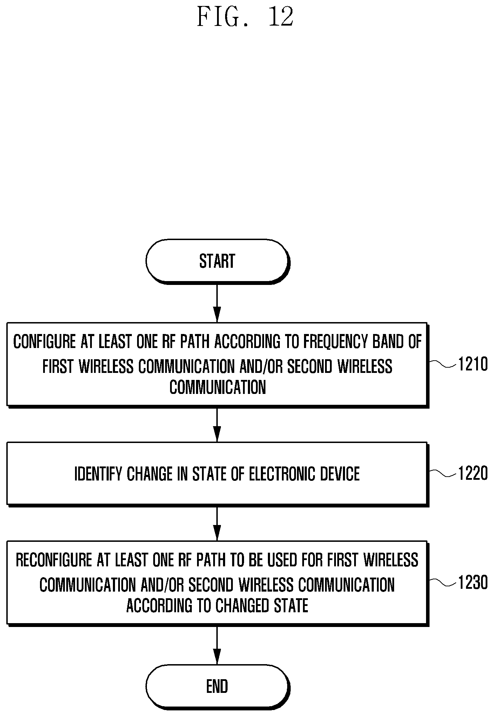

FIG. 12 is a flowchart of the method of controlling the transmission and reception path of the wireless signal of the electronic device according to one embodiment.

A method illustrated in FIG. 12 may be performed by an electronic device (e.g., the electronic device 900 of FIG. 9), and, for technical features described above, description may be omitted below.

According to one embodiment, in operation 1210, the electronic device may configure at least one RF path according to a frequency band of the first wireless communication and/or the second wireless communication. For example, the electronic device may index an antenna and an RF path to be used in each wireless communication type and frequency band and may store the indexed antenna and RF path in a table form in a memory. The electronic device may store a table storing antenna information to be used in signal transmission for each of a folding state and an unfolding state of the electronic device. When the electronic device is currently in an unfolding state and LTE B40 and Wi-Fi 2.4GHz are activated, the electronic device may identify, in a table, an antenna index mapping an antenna and an RF path including the antenna to be used for transmission and reception of an LTE B40 signal and transmission and reception of Wi-Fi 2.4GHz corresponding to a current state.

According to one embodiment, in operation 1220, the electronic device may identify a change in state of the electronic device. For example, the electronic device may identify an angle between a first housing and a second housing through a folding detection sensor, and may identify whether the electronic device is in a folding state or an unfolding state based on an identified angle.

According to one embodiment, in operation 1230, the electronic device may reconfigure at least one RF path to be used for the first wireless communication and/or the second wireless communication. For example, when the electronic device is changed from an unfolding state to a folding state, the electronic device may identify, in a table, an antenna index mapping an antenna and an RF path including the antenna to be used for transmission and reception of an LTE B40 signal and transmission and reception of Wi-Fi 2.4GHz corresponding to a folding state. The electronic device may determine, by using an identified antenna index, an antenna and an RF path to be used for transmission and reception of an LTE B40 signal and an antenna and an RF path to be used for transmission and reception of Wi-Fi 2.4GHz.

According to one embodiment, the electronic device may be a foldable type electronic device foldable about a folding axis (e.g., an electronic device 200 of FIG. 2A to FIG. 2D, an electronic device 300 of FIG. 3A to FIG. 3D).

According to one embodiment, the electronic device may transmit and receive the first signal of a first wireless communication type (e.g., WWAN) by using at least one among a plurality of antennas disposed on a first housing and a plurality of antennas disposed on a second housing, and may transmit and receive the second signal of a second wireless communication type (e.g., WLAN, Bluetooth) by using another at least one among the plurality of antennas. For example, the electronic device may output the first signal (e.g., an LTE B40 signal) through a Sub 5 antenna disposed on a first housing and a Main 2 antenna disposed on a second housing, and may receive the second signal (e.g., a Wi-Fi 2.4GHz signal) through a Sub 2 antenna and a Sub 4 antenna disposed on the first housing. When the first wireless communication and the second wireless communication are not simultaneously operating, the electronic device may transmit and receive the first signal and the second signal respectively by using a determined antenna and an RF path including the antenna as described above.

In FIG. 13A and FIG. 13B, operation of the electronic device in a co-existence situation in which the first wireless communication and the second wireless communication are simultaneously activated will be described. A method illustrated in FIG. 13A and FIG. 13B may be performed by an electronic device (e.g., an electronic device 900 of FIG. 9), and, for technical features described above, description may be omitted below.

FIG. 13A is a flowchart of a method of blocking a part among a Tx path of a first signal when an electronic device is unfolded according to one embodiment.

According to one embodiment, in operation 1310, the electronic device may identify activation of a first wireless communication and/or a second wireless communication. Here, a first wireless communication is described by using LTE B40 of WWAN (or cellular wireless communication), and a second wireless communication is described by using a 2.4GHz band of WLAN (or Wi-Fi) as an example, however, embodiments are not limited thereto, and various embodiments of the present document may be applied also in a case in which a first wireless communication and a second wireless communication use other frequency bands in which at least a portion overlaps, such as NR n79 and a Wi-Fi 5GHz band. Also, below, a case is described as an example in which a Tx signal output of LTE B40 affects a reception path of Wi-Fi 2.4GHz, but, conversely, a Tx signal output of Wi-Fi 2.4GHz may affect a reception path of LTE B40.

According to one embodiment, in operation 1320, the electronic device may identify that a current state of the electronic device is an unfolding state. For example, the electronic device may identify an angle between a first housing and a second housing by using a sensor (e.g., a sensor of FIG. 9), and, when an identified angle is equal to or greater than a reference angle (e.g., 175 degrees), may determine that the electronic device is in the unfolding state.

According to one embodiment, in operation 1325, the electronic device may identify whether Tx power of a first signal of the first wireless communication is equal to or greater than a first reference value. Here, the first reference value is an intensity to a degree that, when the electronic device is in the unfolding state, an output signal of an antenna disposed on the first housing (e.g., a first housing 610 of FIG. 6, a first housing 710 of FIG. 7) may affect performance of a reception path of an antenna disposed on the second housing (e.g., a second housing 620 of FIG. 6, a second housing 720 of FIG. 7), and, for example, the first reference value may be configured to about -20 dBm, but the first reference value is not limited thereto, and may be determined by variables such as a disposition position and/or a distance of an antenna used for the first wireless communication and the second wireless communication, an RF path, and a type/property of an antenna. According to one embodiment, the electronic device may determine Tx power of the first signal by considering various factors such as strength of a reception signal, a connection state, a surrounding communication environment or an electric field, and a battery state.

According to one embodiment, when Tx power of the first signal is equal to or greater than the first reference value, in operation 1330, the electronic device may identify an antenna index to be used for transmitting the first signal. According to one embodiment, the electronic device may index an antenna and an RF path to be used in each wireless communication type and frequency band and may store the indexed antenna and RF path in a table form in a memory. The electronic device may store a table storing antenna information to be used in signal transmission for each of a folding state and an unfolding state of the electronic device. The electronic device may identify, in a table stored in the memory, an antenna index corresponding to a current state (e.g., an unfolding state) of the electronic device and a used wireless communication type and frequency band (e.g., LTE B40). According to one embodiment, when the electronic device is in the unfolding state in an LTE B40 and Wi-Fi 2.4GHz co-existence situation, indexing may be performed as using only an antenna disposed on the second housing (e.g., a Main 2 antenna) for output of an LTE B40 signal.

According to one embodiment, in operation 1335, the electronic device may stop output of the first signal by using an antenna disposed on the first housing (e.g., a Sub 5 antenna) corresponding to an identified antenna index. For example, the electronic device may identify that only a Main 2 antenna disposed on the second housing is indexed for output of an LTE B40 signal, may stop output of an LTE B40 signal of the Sub 5 antenna, and may output an LTE B40 signal by using only the Main 2 antenna.

According to one embodiment, in operation 1340, the electronic device may receive a second signal by using an antenna disposed on the first housing (e.g., Sub 2 and Sub 4 antennas), and, at least partially simultaneously with the reception, may output the first signal through an antenna disposed on the second housing (e.g., a Main 2 antenna). For example, a Sub 2 antenna and a Sub 4 antenna disposed on the first housing may be space far apart from a Main 2 antenna disposed on the second housing when the electronic device is in the unfolding state, and, accordingly, even when a signal is output at high power equal to or greater than the first reference value in the Main 2 antenna, an amount of radio waves introduced into the Sub 2 antenna and the Sub 4 antenna may be insignificant. Accordingly, even when output of the first signal and reception of the second signal are simultaneously performed, the Rx path including the Sub 2 antenna and the Sub 4 antenna may not be substantially affected.

According to one embodiment, when Tx power of the first signal is less than the first reference value, in operation 1345, the electronic device may receive the second signal by using an antenna disposed on the first housing, and, at least partially simultaneously with the reception, may output the first signal by using both an antenna disposed on the first housing and an antenna disposed on the second housing. For example, the electronic device may operate an antenna at low power (e.g., -40 dBm to -20 dBm) when transmitting only a signal of physical uplink control channel (PUCCH) in a strong electric field region, and, in this case, output of a Sub 5 antenna disposed on the first housing may not affect an Rx path of a Sub 4 antenna and a Sub 2 antenna disposed on the first housing. Accordingly, when Tx power of the first signal is low to be less than the first reference value, the electronic device may operate an antenna in a co-existence situation of the first wireless communication and the second wireless communication as in a situation that is not co-existence.

FIG. 13B is a flowchart of a method of dividing a time domain and transmitting the first signal and receiving a second signal when the electronic device is folded according to one embodiment.

According to one embodiment, in operation 1350, the electronic device may identify activation of a first wireless communication (e.g., LTE B40) and a second wireless communication (e.g., Wi-Fi 2.4GHz).

According to one embodiment, in operation 1360, the electronic device may identify that a current state of the electronic device is a folding state. For example, the electronic device may identify an angle between a first housing and a second housing by using a sensor (e.g., a sensor of FIG. 9), and, when an identified angle is less than a reference angle (e.g., 5 degrees), may determine that the electronic device is in an folding state.

According to one embodiment, in operation 1365, the electronic device may identify whether Tx power of a first signal of the first wireless communication is equal to or greater than a second reference value. Here, the second reference value may be a value lower than a first reference value when the electronic device is in the folding state. A Sub 2 antenna disposed on the first housing and a Main 2 antenna disposed on the second housing, which were far apart in the unfolding state of the electronic device, may have a distance therebetween becoming close in the folding state. Accordingly, the second reference value may be a value very low compared to the first reference value used in the unfolding state.

According to one embodiment, when Tx power of the first signal is equal to or greater than the second reference value, in operation 1370, the electronic device may identify an antenna index to be used for transmitting the first signal. The electronic device may identify, in a table stored in the memory, an antenna index corresponding to a current state (e.g., a folding state) of the electronic device and a used wireless communication type and frequency band (e.g., LTE B40, Wi-Fi 2.4GHz). According to one embodiment, when the electronic device is in the folding state in an LTE B40 and Wi-Fi 2.4GHz co-existence situation, an antenna index mapped with respect to output of an LTE B40 signal and reception of a Wi-Fi 2.4GHz signal may not exist, or indexing may be performed as only a time-division scheme operation being possible.

According to one embodiment, the electronic device may identify, through an antenna index, that output of the first signal and reception of the second signal are not simultaneously possible, and may divide a time domain to alternately perform output of the first signal and reception of the second signal.

According to one embodiment, in operation 1375, the electronic device may output the first signal during at least a part of a first time duration in one period. Because reception of the second signal is not performed in the first time duration according to division of the time domain, the electronic device may output the first signal by using both a Sub 5 antenna disposed on the first housing and a Main 3 antenna disposed on the second housing, which are configured for output of the first signal as in a situation that is not co-existence.

According to one embodiment, in operation 1380, the electronic device may receive the second signal during at least a part of a second time duration after the first time duration. The electronic device may receive the second signal by using both a Sub 2 antenna and a Sub 4 antenna disposed on the first housing, which are be configured for reception of the second signal as in a situation that is not co-existence.

According to one embodiment, when Tx power of the first signal is less than the second reference value, in operation 1385, the electronic device may receive the second signal by using an antenna disposed on the first housing, and, at least partially simultaneously with the reception, may output the first signal by using both an antenna disposed on the first housing and an antenna disposed on the second housing. When Tx power of the first signal is less than the second reference value, because output of a Tx signal is low to a degree not affecting an Rx path that is immediately adjacent, the electronic device may operate an antenna as in a situation that is not co-existence.

FIG. 14 is a flowchart of a method of blocking a part among an Rx path of the second signal when an electronic device is unfolded according to one embodiment.

According to one embodiment, the electronic device may be a foldable type electronic device foldable about a folding axis (e.g., an electronic device 200 of FIG. 2A to FIG. 2D, an electronic device 300 of FIG. 3A to FIG. 3D).

According to one embodiment, the electronic device may transmit and receive a first signal of a first wireless communication type (e.g., WLAN) by using at least one among a plurality of antennas disposed on a first housing and a plurality of antennas disposed on a second housing, and may transmit and receive a second signal of a second wireless communication type (e.g., WWAN) by using another at least one among the plurality of antennas. For example, the electronic device may operate as a total of 4 Rx by including two Rx paths formed in the first housing and two Rx paths formed in the second housing when receiving a second signal of LTE B40. When the first wireless communication and the second wireless communication are not simultaneously operating, the electronic device may transmit and receive the first signal and the second signal respectively by using a determined antenna and an RF path including the antenna as described above.

In FIG. 14, operation of the electronic device in a co-existence situation in which the first wireless communication and the second wireless communication are simultaneously activated will be described. A method illustrated in FIG. 14 may be performed by an electronic device (e.g., the electronic device 900 of FIG. 9), and, for technical features described above, description may be omitted below.

According to one embodiment, in operation 1410, the electronic device may identify activation of the first wireless communication and the second wireless communication. Here, the first wireless communication uses a 2.4GHz band of WLAN (or Wi-Fi) and the second wireless communication uses LTE B40 of WWAN (or cellular wireless communication) as an example for description, however, the present disclosure is not limited thereto, and, even when the first wireless communication and the second wireless communication use other frequency bands in which at least a part overlaps, such as a Wi-Fi 5GHz band and NR n79, various embodiments of the present document may be applied. In addition, hereinafter, output of a Tx signal of Wi-Fi 2.4GHz affecting a reception path of an LTE B40 signal is described as an example, however, conversely, output of an LTE B40 Tx signal may also affect a reception path of a Wi-Fi 2.4GHz signal.

According to one embodiment, in operation 1415, the electronic device may identify that a current state of the electronic device is an unfolding state. For example, the electronic device may identify an angle between a first housing and a second housing by using a sensor (e.g., a sensor of FIG. 9), and, when an identified angle is equal to or greater than a reference angle (e.g., 175 degrees), may determine that the electronic device is in the unfolding state.

According to one embodiment, in operation 1420, the electronic device may identify whether Tx power of a first signal of the first wireless communication is equal to or greater than a first reference value. Here, the first reference value, when the electronic device is in an unfolding state, is an intensity to a degree that an output signal of an antenna disposed on a first housing (e.g., a first housing of FIG. 6, a first housing of FIG. 7) may affect performance of a reception path of an antenna disposed on a second housing (e.g., a second housing of FIG. 6, a second housing of FIG. 7), and, for example, may be configured to about -20 dBm, however, the present disclosure is not limited thereto, and may be determined by variables such as a disposition position and/or a distance of an antenna used for the first wireless communication and the second wireless communication, an RF path, and a type/attribute of an antenna. According to one embodiment, the electronic device may determine Tx power of the first signal by considering various factors such as strength of a reception signal, a connection state, a surrounding communication environment or an electric field, and a battery state.

According to one embodiment, when Tx power of the first signal is equal to or greater than the first reference value, in operation 1425, the electronic device may identify an antenna index to be used for transmitting the first signal. According to one embodiment, the electronic device may index an antenna and an RF path to be used in each wireless communication type and frequency band and may store the indexed antenna and RF path in a table form in a memory. The electronic device may store a table storing antenna information to be used in signal transmission for each of a folding state and an unfolding state of the electronic device. The electronic device may identify, in the table stored in the memory, an antenna index corresponding to a current state (e.g., an unfolding state) of the electronic device and a used wireless communication type and frequency band (e.g., Wi-Fi 2.4GHz, LTE B40). According to one embodiment, when the electronic device is in an unfolding state in an LTE B40 and Wi-Fi 2.4GHz co-existence situation, indexing may be performed as using only an antenna disposed on the second housing for reception of an LTE B40 signal.

According to one embodiment, in operation 1430, the electronic device may stop reception of a second signal of an antenna disposed on the first housing, corresponding to an identified antenna index. For example, the electronic device may identify that only antennas disposed on the second housing are indexed for reception of an LTE B40 signal, and may deactivate at least one component (i.e., part) (e.g., an LNA (low noise amplifier)) disposed in an Rx path connected to an antenna disposed on the first housing. The electronic device may operate as a total of 4 Rx when a co-existence situation is not present, and, by blocking an Rx path including an antenna disposed on the first housing, may receive the second signal by using two Rx paths including antennas disposed on the second housing.

According to one embodiment, in operation 1435, the electronic device may output a first signal (e.g., a WLAN signal, a Wi-Fi 2.4GHz signal) by using an antenna disposed on the first housing, and may receive a second signal (e.g., a WWAN signal, an LTE B40 signal) by using an antenna disposed on the second housing. For example, the electronic device may maintain 2 Rx by turning on a MIMO PRx configured of an antenna of the second housing for reception of the second signal. Alternatively, the electronic device may receive the second signal by additionally using, in co-existence, an antenna among antennas disposed on the second housing that was not used for receiving the second signal before co-existence of the first wireless communication and the second wireless communication.

According to one embodiment, when Tx power of the first signal is less than the first reference value, in operation 1440, the electronic device may output the first signal by using an antenna disposed on the first housing, and, at least partially simultaneously therewith, may receive the second signal by using both an antenna disposed on the first housing and an antenna disposed on the second housing. When Tx power of the first signal is low to be less than the first reference value, the electronic device may operate antennas as in a situation that is not co-existence even in a co-existence situation of the first wireless communication and the second wireless communication.

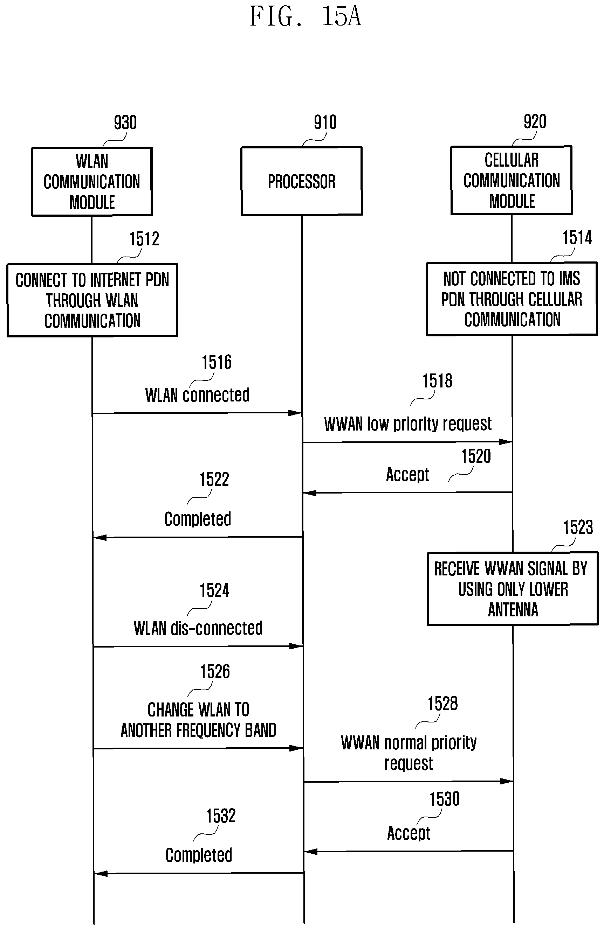

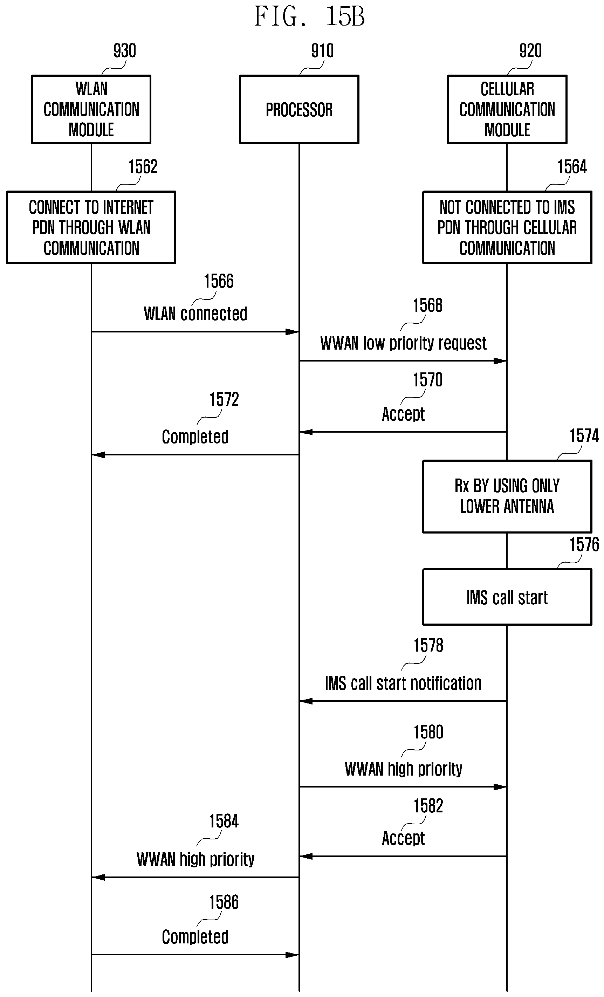

FIG. 15A and FIG. 15B are a flowchart of a method of preferentially transmitting and receiving a WLAN signal when an electronic device is in an unfolded state and is simultaneously connected to a WWAN and a WLAN according to one embodiment.

Methods illustrated in FIG. 15A and FIG. 15B may be performed by the electronic device (e.g., the electronic device 900 of FIG. 9), and a processor 910, a cellular communication module 920, and a short-range communication module 930 may be the processor 910 of FIG. 9, the cellular communication module 920 of FIG. 9, and the short-range communication module 930 of FIG. 9, respectively. For technical features described above, description may be omitted below.

FIG. 15A illustrates an embodiment of configuring a priority of WLAN high when WLAN is connected and disconnected.

According to one embodiment, in operation 1512, the electronic device may be connected to an Internet PDN through WLAN communication (or wireless LAN, Wi-Fi) by using the short-range communication module 930. For example, the electronic device is connected to an adjacent AP (access point) through WLAN, and may transmit and receive data with a PDN through the AP. In a state in which the electronic device is connected to an Internet PDN through WLAN, cellular communication using the cellular communication module 920 may be in a state not connected to an IMS PDN. (1514)

According to one embodiment, in operation 1516, the short-range communication module 930 may provide, when a WLAN connection is performed, WLAN connection information to the processor 910. The processor 910 may transmit and receive various information related to wireless LAN communication through a determined interface with the short-range communication module 930.

According to one embodiment, in operation 1518, the processor 910 may transmit a WWAN low priority request to the cellular communication module 920. Here, the WWAN low priority request may include a request for operating, by configuring, a priority of WWAN (e.g., LTE B40 or NR n79) to be lower than WLAN (e.g., Wi-Fi 2.4GHz or 5GHz) operating in overlapping frequency bands, to operate such that a signal transmission and reception of WLAN is not affected.

According to one embodiment, in operation 1520, the cellular communication module 920 may reply with accept in response to the WWAN low priority request of the processor 910, and, in operation 1522, the processor 910 may notify the short-range communication module 930 that the WWAN low priority request is completed.

According to one embodiment, in operation 1523, the cellular communication module 920 may receive a WWAN signal by using only a lower antenna among antennas used for receiving the WWAN signal. For example, the electronic device may be configured to receive the WWAN signal by using at least one upper antenna disposed on a first housing and at least one lower antenna disposed on a second housing, and, because an antenna used for transmission and reception of a WLAN signal is disposed on the first housing, in a WWAN low priority situation, transmission and reception of the WWAN signal through the at least one upper antenna disposed on the first housing may be stopped. The cellular communication module 920 may maintain 2 Rx by turning on a MIMO PRx configured of at least one lower antenna for reception of the WWAN signal, or may receive the WWAN signal by additionally using, in a co-existence situation, an antenna among lower antennas disposed on the second housing that was not used for receiving the WWAN signal.

According to one embodiment, when a WLAN connection is disconnected, the short-range communication module 930 may deliver, to the processor 910, information indicating WLAN disconnection. According to one embodiment, when WLAN is changed to another frequency band (e.g., when changing from a Wi-Fi 2.4GHz band to a Wi-Fi 5GHz band), the short-range communication module 930 may deliver, to the processor 910, information indicating a frequency band change.

According to one embodiment, when receiving information indicating WLAN disconnection (operation 1524), or receiving information indicating a WLAN frequency band change (operation 1526), the processor 910 may transmit a WWAN normal priority request to the cellular communication module 920.

According to one embodiment, in operation 1530, the cellular communication module 920 may reply with accept in response to the WWAN normal priority request of the processor 910, and, in operation 1532, the processor 910 may notify the short-range communication module 930 that the WWAN normal priority request is completed.

According to one embodiment, when receiving the WWAN normal priority request, the cellular communication module 920 may again receive the WWAN signal by using at least one upper antenna disposed on the first housing and at least one lower antenna disposed on the second housing. For example, the cellular communication module 920, in a situation of transmitting and receiving an NR n79 signal by using both an upper antenna and a lower antenna, when receiving a WWAN low priority request, may use only the lower antenna, and, when receiving a WWAN normal priority request according to Wi-Fi disconnection or a frequency band change to Wi-Fi 2.4GHz, may again transmit and receive the NR n79 signal by using both the upper antenna and the lower antenna.

FIG. 15B illustrates an embodiment of configuring a priority of WWAN high when an IMS call connection of WWAN is performed.

According to one embodiment, in operation 1562, the electronic device may be connected to an Internet PDN through WLAN communication (or wireless LAN, Wi-Fi) by using the short-range communication module 930, and cellular communication using the cellular communication module 920 may be in a state not connected to an IMS PDN. (1564)

According to one embodiment, in operation 1566, the short-range communication module 930 may provide, when a WLAN connection is performed, WLAN connection information to the processor 910.

According to one embodiment, in operation 1568, the processor 910 may transmit a WWAN low priority request to the cellular communication module 920. According to one embodiment, in operation 1570, the cellular communication module 920 may reply with accept in response to the WWAN low priority request of the processor 910, and, in operation 1572, the processor 910 may notify the short-range communication module 930 that the WWAN low priority request is completed.

According to one embodiment, in operation 1574, the cellular communication module 920 may receive a WWAN signal by using only a lower antenna among antennas used for receiving the WWAN signal. For example, the electronic device may be configured to receive the WWAN signal by using at least one upper antenna disposed on a first housing and at least one lower antenna disposed on a second housing, and, because an antenna used for transmission and reception of a WLAN signal is disposed on the first housing, in a WWAN low priority situation, transmission and reception of the WWAN signal through the at least one upper antenna disposed on the first housing may be stopped.

According to one embodiment, in operation 1576, when performing call origination or call reception, the cellular communication module 920 may start call connection through IMS (IP multimedia subsystem). In operation 1578, the cellular communication module 920 may deliver, to the processor 910, a notification indicating start of an IMS call.

According to one embodiment, the processor 910 may configure a priority of WWAN to be higher than WLAN to compensate continuity of a call when IMS call connection is performed.

According to one embodiment, in operation 1580, the processor 910 may transmit a WWAN high priority request to the cellular communication module 920, and, in operation 1582, the cellular communication module 920 may reply with accept. In addition, in operation 1584, the processor 910 may transmit a WWAN high priority request to the short-range communication module 930, and, in operation 1586, the short-range communication module 930 may reply with completed. Operation 1580 to 1582 and operation 1584 to 1586 may have an order changed with respect to each other, or may be performed at least partially simultaneously.

According to one embodiment, the cellular communication module 920 may, according to a WWAN high priority request, transmit and receive a WWAN signal again by using both an upper antenna disposed on the first housing and a lower antenna disposed on the second housing.

FIG. 16 is a flowchart of a method of changing a frequency of the WLAN when the electronic device is in a simultaneously connected state of the WWAN and the WLAN according to one embodiment.

The method illustrated in FIG. 16 may be performed by the electronic device (e.g., the electronic device 900 of FIG. 9), and the processor 910, the cellular communication module 920, and the short-range communication module 930 may be the processor 910 of FIG. 9, the cellular communication module 920 of FIG. 9, and the short-range communication module 930 of FIG. 9, respectively. For technical features described above, description may be omitted below.

According to one embodiment, the electronic device may perform WLAN communication in a plurality of frequency bands. For example, the electronic device may transmit and receive a WLAN signal by using a Wi-Fi 2.4GHz band and/or a Wi-Fi 5GHz band.

According to one embodiment, in operation 1612, the cellular communication module 920 may deliver, to the processor 910, a notification indicating activation (or start) of WWAN communication. For example, the short-range communication module 930 may transmit and receive a wireless LAN signal in a Wi-Fi 2.4GHz band, and the cellular communication module 920 may transmit and receive an LTE B40 signal in a frequency band adjacent to or at least partially overlapping with the Wi-Fi 2.4GHz band.

According to one embodiment, when receiving the notification indicating WWAN activation, the electronic device may identify priorities of WWAN and WLAN. For example, the electronic device may determine, as a case in which a priority of WWAN is higher than WLAN, a case in which an adjacent external device to be connected through WLAN does not exist, a case in which communication performance of WWAN is relatively superior, a case in which an IMS call using WWAN is being performed, and/or a case based on a user configuration.

According to one embodiment, in operation 1614, the electronic device may deliver a WLAN low priority request to the short-range communication module 930. In operation 1616, the short-range communication module 930 may reply with accept in response to the WLAN low priority request, and, in operation 1618, the processor 910 may notify the cellular communication module 920 that the WLAN low priority request is completed.

According to one embodiment, in operation 1619, the short-range communication module 930 may change an operating frequency of WLAN. For example, the short-range communication module 930 may use at least one among a Wi-Fi 2.4GHz band and a 5GHz band, and, in a situation of using both the Wi-Fi 2.4GHz band and the 5GHz band, may receive the WLAN low priority request according to activation of LTE B40 having an adjacent frequency band. In this case, the short-range communication module 930 may switch to the Wi-Fi 5GHz band that is not adjacent in a frequency band to LTE B40, and may transmit and receive the wireless LAN signal by using only the 5GHz band excluding the Wi-Fi 2.4GHz band. Alternatively, the short-range communication module 930 may receive the WLAN low priority request according to activation of NR n79 having an adjacent frequency band, in a situation of using the Wi-Fi 5GHz band. In this case, the short-range communication module 930 may switch to the Wi-Fi 2.4GHz band that is not adjacent in a frequency band to NR n79, and may transmit and receive the wireless LAN signal.

According to one embodiment, for WWAN (e.g., 4G LTE, 5G NR), after accessing a network through a random access channel (RACH) and then becoming an RRC connected state, the electronic device may not select a serving band by itself. In contrast, for WLAN, the electronic device may select, by itself, a frequency band to be used for transmission and reception of a WLAN signal in a state connectable to a plurality of frequency bands.

According to one embodiment, when a WWAN connection is released, in operation 1620, the cellular communication module 920 may deliver, to the processor 910, a notification indicating WWAN deactivation.

According to one embodiment, when WWAN deactivation is identified, the processor 910 may, in operation 1622, deliver a WLAN normal priority request to the short-range communication module 930. In operation 1624, the short-range communication module 930 may reply with accept in response to the WLAN normal priority request, and, in operation 1626, the processor 910 may notify the cellular communication module 920 that the WLAN normal priority request is completed.

According to one embodiment, the electronic device may perform the above-described operation of changing a WLAN frequency band, when being in a folding state. For example, because a distance between antennas disposed on the first housing and antennas disposed on the second housing is long when the electronic device is in an unfolding state, in a co-existence state of WWAN and WLAN, switching a Tx antenna or an Rx antenna of WWAN or WLAN may be performed as in embodiments described with reference to FIG. 13A, FIG. 13B, FIG. 14, FIG. 15A, and FIG. 15B. In contrast, when the electronic device is in a folding state, because antennas disposed on the first housing and antennas disposed on the second housing are adjacent to each other, the above-described antenna switching method may not remove an influence on an Rx path according to Tx signal output. Accordingly, when the electronic device is in a folding state, as described with reference to FIG. 16, the electronic device may change an operating frequency of WLAN, thereby avoiding WWAN and WLAN co-existence.

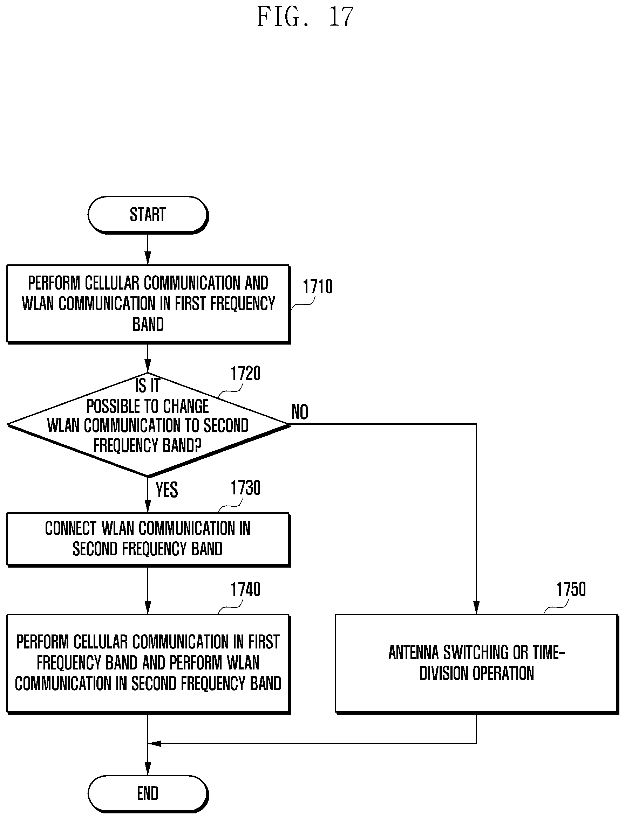

FIG. 17 is a flowchart of a method of changing a frequency of the WLAN when the electronic device is in a simultaneously connected state of the WWAN and the WLAN according to one embodiment.

A method illustrated in FIG. 17 may be performed by an electronic device (e.g., the electronic device 900 of FIG. 9), and, for technical features described above, description may be omitted below.

According to one embodiment, in operation 1710, the electronic device may perform cellular communication and wireless LAN communication in a first frequency band. For example, the electronic device may use LTE B40 and Wi-Fi 2.4GHz using an approximately 2.4GHz band, or may use NR n79 and Wi-Fi 5GHz using an approximately 5GHz band. According to one embodiment, while transmitting and receiving a wireless LAN signal by using the short-range communication module in the first frequency band, the electronic device may detect activation of cellular communication. According to one embodiment, the electronic device may transmit and receive a cellular signal by using at least one antenna among a plurality of antennas, and may transmit and receive a wireless LAN signal by using another at least one antenna.

According to one embodiment, in operation 1720, the electronic device may identify whether wireless LAN communication is changeable to a second frequency band. For example, while transmitting and receiving a wireless LAN signal with an external device (e.g., an access point (AP)) in a 2.4GHz band, the electronic device may identify whether communication with the external device is possible in a 5GHz band.

According to one embodiment, when change to the second frequency band is possible, in operation 1730, the electronic device may connect wireless LAN communication with the external device in the second frequency band. When an operating frequency of wireless LAN communication is changed from the first frequency band to the second frequency band, an antenna transmitting and receiving the wireless LAN signal and an RF path including the antenna may also be changed.

According to one embodiment, in operation 1740, the electronic device may perform cellular communication in the first frequency band, and may perform wireless LAN communication in the switched second frequency band.

According to one embodiment, when wireless LAN communication is not changeable to the second frequency band, in operation 1750, the electronic device may remove an influence on a reception path of the other one due to signal output of any one among cellular communication and wireless LAN communication, through antenna switching and/or a time-division operation. For example, the electronic device may stop signal output (or reception) by using an antenna positioned adjacent to an antenna of wireless LAN communication (or cellular communication), among antennas used for cellular communication (or wireless LAN communication). Alternatively, the electronic device may output (or receive) a signal of cellular communication in a first time duration in one period, and may receive (or output) a signal of wireless LAN communication in a second time duration.

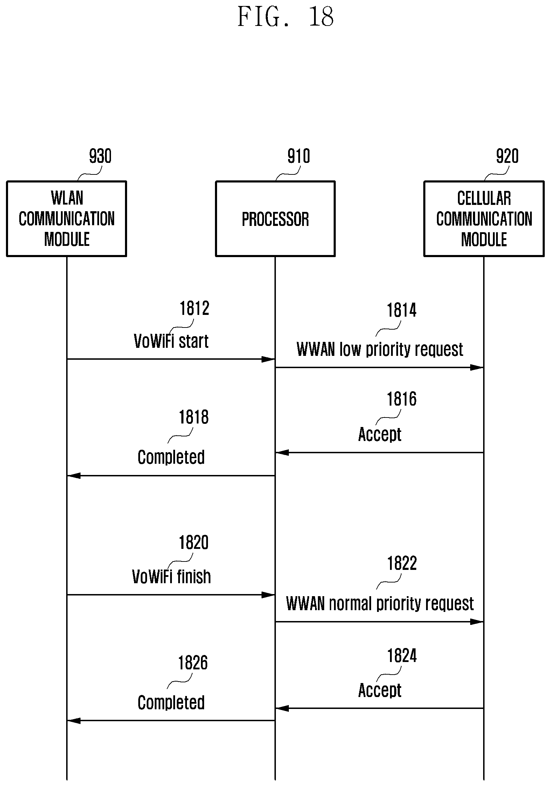

FIG. 18 is a flowchart of a method of preferentially transmitting and receiving the WLAN signal in a VoWiFi call when the electronic device is in the simultaneously connected state of the WWAN and the WLAN according to one embodiment.

A method illustrated in FIG. 18 may be performed by an electronic device (e.g., the electronic device 900 of FIG. 9), and, for technical features described above, description may be omitted below.

According to one embodiment, in operation 1812, when a call based on VoWiFi (voice over Wi-Fi) is started, the short-range communication module 930 may deliver, to the processor 910, a notification indicating start of VoWiFi. According to one embodiment, for a stable VoWiFi call, the processor 910 may configure a priority of WLAN higher than WWAN.

According to one embodiment, in operation 1814, the processor 910 may deliver a WWAN low priority request to the cellular communication module 920. In operation 1816, the cellular communication module 920 may reply with accept in response to the WWAN low priority request, and, in operation 1818, the processor 910 may notify the short-range communication module 930 that the WWAN low priority request is completed.

According to one embodiment, the cellular communication module 920 may, in response to the WWAN low priority request, switch some among Tx antennas of a WWAN signal, or may be temporarily deactivated in a section in which a WLAN signal is transmitted and received.

According to one embodiment, when the VoWiFi call is finished, in operation 1820, the short-range communication module 930 may deliver, to the processor 910, a notification indicating end of VoWiFi. As the VoWiFi call is finished, the processor 910 may configure a priority of WLAN again to be identical to WWAN.

According to one embodiment, in operation 1822, the processor 910 may deliver a WWAN normal priority request to the cellular communication module 920. In operation 1824, the cellular communication module 920 may reply with accept in response to the WWAN normal priority request, and, in operation 1826, the processor 910 may notify the short-range communication module 930 that the WWAN normal priority request is completed.

An electronic device according to various embodiments of the present document may include: a first housing; a second housing rotatably connected to the first housing through a hinge structure; a first area disposed on the first housing and a second area disposed in the second housing; a display foldable based on a boundary area between the first area and the second area as an angle between the first housing and the second housing changes; a first communication module configured to process transmission and reception of a first signal of a first wireless communication type; a second communication module configured to process transmission and reception of a second signal of a second wireless communication type different from the first wireless communication type; a plurality of antennas for transmitting and/or receiving the first signal and/or the second signal; a memory; and a processor disposed in the first housing or the second housing and operatively connected with the display, the first communication module, the second communication module, the antennas, and the memory.

According to one embodiment, the plurality of antennas may comprise at least one antenna disposed on the first housing, and at least one antenna disposed on the second housing, and a distance between the at least one antenna disposed on the first housing and the at least one antenna disposed on the second housing may be changed according to the angle between the first housing and the second housing.

According to one embodiment, the memory may store instructions for identifying transmission of the first signal of a first frequency band through the first communication module, identifying reception of the second signal of a second frequency band at least partially overlapping the first frequency band through the second communication module at least partially simultaneously with the transmission of the first signal, determining a state of the electronic device based on the angle between the first housing and the second housing, and determining, based on the determined state of the electronic device, at least one antenna to be used for transmitting the first signal and at least one antenna to be used for receiving the second signal.

According to one embodiment, the memory may store instructions for determining, when the angle between the first housing and the second housing is equal to or greater than a first reference angle, the state of the electronic device as an unfolding state, determining, when the angle between the first housing and the second housing is less than a second reference angle, the state of the electronic device as a folding state, and, when the state of the electronic device is the unfolding state, outputting the first signal by using at least one antenna disposed on the second housing, and receiving the second signal by using at least one antenna disposed on the first housing.

According to one embodiment, the plurality of antennas may include a first antenna and a second antenna disposed on the first housing, and a third antenna disposed on the second housing, the first signal may be transmitted through the second antenna and the third antenna, the second signal may be received through the first antenna, and the memory may store instructions for, when the state of the electronic device is the unfolding state, while receiving the second signal through the first antenna, stopping output (i.e., transmission) of the first signal by using the second antenna, and outputting the first signal by using the third antenna.

According to one embodiment, the memory may store instructions for, when an output intensity of the first signal is equal to or greater than a first reference value, stopping output (i.e., transmission) of the first signal by using the second antenna, and outputting the first signal by using the third antenna.

According to one embodiment, the memory may store instructions for, when an output intensity of the first signal is less than the first reference value, outputting the first signal by using the second antenna and the third antenna.

According to one embodiment, when output of the first signal is started, the first communication module may transmit, to the processor, a first notification indicating output of the first signal, and the memory may store instructions for, in response to reception of the first notification, identifying, through the second communication module, that reception of the second signal is in progress, and transmitting, to the first communication module, a second notification indicating that reception of the second signal is in progress.

According to one embodiment, the memory may store instructions for transmitting, to the first communication module, the second notification including information of an antenna, among a plurality of antennas capable of outputting the first signal, to stop output of the first signal according to reception of the second signal.

According to one embodiment, the memory may store instructions for receiving the first notification from the first communication module via a first pin, and transmitting the second notification to the first communication module via a second pin.

According to one embodiment, the memory may store a table mapping, corresponding to the state of the electronic device, at least one antenna used for transmitting the first signal and at least one antenna used for receiving the second signal.

According to one embodiment, the plurality of antennas may include a fourth antenna and a fifth antenna disposed on the first housing, and a sixth antenna disposed on the second housing, the first signal may be transmitted through the fourth antenna, the second signal may be received through the fifth antenna and the sixth antenna, and the memory may store instructions for, when the state of the electronic device is the unfolding state, while outputting the first signal through the fourth antenna, stopping reception of the second signal by using the fifth antenna, and receiving the second signal by using the sixth antenna.

According to one embodiment, the memory may store instructions for, when the state of the electronic device is in the folding state, in one period including a first time duration and a second time duration, outputting the first signal by using at least one antenna during at least a part of the first time duration, and receiving the second signal by using another at least one antenna during at least a part of the second time duration.

According to one embodiment, the second signal of the second wireless communication type may be transmitted and received in the second frequency band and/or a third frequency band not overlapping the first frequency band and the second frequency band, and the memory may store instructions for, when the state of the electronic device is in the folding state, stopping transmission and reception of the second signal in the second frequency band, and transmitting and receiving the second signal through the third frequency band.

According to one embodiment, the memory may store instructions for, when performing a voice call through the second wireless communication type, stopping transmission of the first signal.

A method of controlling a transmission and reception path of a wireless signal of an electronic device according to various embodiments of the present document may include operations of: identifying transmission of a first signal of a first frequency band; identifying reception of the second signal of a second frequency band at least partially overlapping the first frequency band at least partially simultaneously with the transmission of the first signal; determining a state of the electronic device based on an angle between a first housing and a second housing of the electronic device; and determining, based on the determined state of the electronic device, at least one antenna to be used for transmitting the first signal and at least one antenna to be used for receiving the second signal.

According to one embodiment, the operation of determining the state of the electronic device may include an operation of determining, when the angle between the first housing and the second housing is equal to or greater than a first reference angle, the state of the electronic device as an unfolding state, and an operation of determining, when the angle between the first housing and the second housing is less than a second reference angle, the state of the electronic device as a folding state, and the operation of determining at least one antenna to be used for transmitting the first signal and at least one antenna to be used for receiving the second signal may include, when the state of the electronic device is the unfolding state, an operation of outputting the first signal by using at least one antenna disposed on the second housing, and receiving the second signal by using at least one antenna disposed on the first housing.

According to one embodiment, the electronic device may include a first antenna and a second antenna disposed on the first housing and a third antenna disposed on the second housing, the first signal may be transmitted through the second antenna and the third antenna, the second signal may be received through the first antenna, and an operation of determining at least one antenna to be used for transmitting the first signal and at least one antenna to be used for receiving the second signal may include an operation of, when a state of the electronic device is an unfolding state, while receiving the second signal through the first antenna, stopping output (i.e., transmission) of the first signal by using the second antenna, and outputting the first signal by using the third antenna.

According to one embodiment, the method may include an operation of, when an output intensity of the first signal is equal to or greater than a first reference value, stopping output (i.e., transmission) of the first signal by using the second antenna, and outputting the first signal by using the third antenna.

According to one embodiment, the method may include an operation of, when an output intensity of the first signal is less than the first reference value, outputting the first signal by using the second antenna and the third antenna.

According to one embodiment, the electronic device may store, corresponding to the state of the electronic device, a table mapping at least one antenna used for transmitting the first signal and at least one antenna used for receiving the second signal.

According to one embodiment, the plurality of antennas may include a fourth antenna and a fifth antenna disposed on the first housing and a sixth antenna disposed on the second housing, the first signal may be transmitted through the fourth antenna, the second signal may be received through the fifth antenna and the sixth antenna, and an operation of determining at least one antenna to be used for transmitting the first signal and at least one antenna to be used for receiving the second signal may include an operation of, when the state of the electronic device is the unfolding state, while outputting the first signal through the fourth antenna, stopping reception of the second signal by using the fifth antenna, and receiving the second signal by using the sixth antenna.

The electronic device according to various embodiments disclosed in the present document may be a device in various forms. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-mentioned devices.

Various embodiments of this document and the terms used in the embodiments are not intended to limit the technical features disclosed in this document to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

The term "module" used in various embodiments of the present document may include a unit implemented in hardware, software, or firmware, and may interchangeably be used with other terms, for example, "logic," "logic block," "part," or "circuitry". The module may be a single integral component (i.e., part), or a minimum unit or portion thereof, adapted to perform one or more functions. For example, according to one embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, the processor (e.g., processor 120) of the device (e.g., electronic device 101) may invoke and execute at least one of one or more instructions stored from the storage medium. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, "non-transitory" only means that the storage medium is a tangible device and does not include signals (e.g., electromagnetic waves), and this term does not distinguish between the case where the data is stored on the storage medium permanently and the case where the data is stored temporarily.

According to one embodiment, the methods according to various embodiments disclosed in this document may be included in and provided as a computer program product. The computer program product may be traded as a product between a seller and a buyer. The computer program product may be distributed in the form of a device-readable storage medium (e.g., compact disc read only memory (CD-ROM)), or it may be distributed online (e.g., downloaded or uploaded) through an application store (e.g., Play Store^{™}) or directly between two user devices (e.g., smartphones). In case of the distribution online, at least part of the computer program product may be temporarily generated or at least temporarily stored in the machine-readable storage medium, such as memory of the manufacturer's server, a server of the application store, or a relay server.

According to various embodiments, each constituent element (e.g., module or program), among the above-mentioned constituent elements, may include a single object or a plurality of objects, and some of the plurality of objects may be disposed separately in different constituent elements. According to various embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration. According to various embodiments, operations performed by the module, the program, or another constituent element may be carried out sequentially, in parallel, repeatedly, or heuristically, or one or more of the operations may be executed in a different order or omitted, or one or more other operations may be added.

## Claims

1. An electronic device comprising:
a first housing;
a second housing rotatably connected to the first housing through a hinge structure;
a display comprising a first area disposed on the first housing and a second area disposed on the second housing and foldable based on a boundary area of the first area and the second area according to change of an angle between the first housing and the second housing;
a first communication module configured to control transmission and reception of a first signal of a first wireless communication scheme;
a second communication module configured to control transmission and reception of a second signal of a second wireless communication scheme different from the first wireless communication scheme;
a plurality of antennas for transmitting and/or receiving the first signal and/or the second signal;
a memory; and
at least one processor disposed in the first housing or the second housing and operatively connected with the display, the first communication module, the second communication module, the plurality of antennas, and the memory,
wherein the plurality of antennas comprises at least one antenna disposed on the first housing and at least one antenna disposed on the second housing, and
a distance between the at least one antenna disposed on the first housing and the at least one antenna disposed on the second housing is changeable depending on the angle between the first housing and the second housing, and
wherein the memory stores instructions executable by the at least one processor to cause the electronic device to:
identify transmission of the first signal of a first frequency band through the first communication module;
identify reception of the second signal of a second frequency band at least partially overlapping with the first frequency band through the second communication module, at least partially simultaneously with the transmission of the first signal;
determine a state of the electronic device based on the angle between the first housing and the second housing; and
determine at least one antenna to be used for transmitting the first signal and at least one antenna to be used for receiving the second signal, based on the determined state of the electronic device.

2. The electronic device of claim 1,
wherein the memory stores instructions to cause the electronic device to:
determine the state of the electronic device as an unfolding state, if the angle between the first housing and the second housing is equal to or larger than a first reference angle;
determine the state of the electronic device as a folding state, if the angle between the first housing and the second housing is smaller than a second reference angle; and
if the state of the electronic device is the unfolding state:
output the first signal using at least one antenna disposed on the second housing; and
receive the second signal using at least one antenna disposed on the first housing.

3. The electronic device of claim 2,
wherein the plurality of antennas comprises a first antenna and a second antenna disposed on the first housing, and a third antenna disposed on the second housing,
wherein the first signal is transmittable through the second antenna and the third antenna and the second signal is receivable through the first antenna, and
wherein the memory stores instructions to cause the electronic device to:
if the state of the electronic device is the unfolding state,
stop transmission of the first signal using the second antenna while receiving the second signal through the first antenna, and
output the first signal through the third antenna.

4. The electronic device of claim 3,
wherein the memory stores instructions to cause the electronic device to:
if an output power of the first signal is equal to or larger than a first reference value, stop transmission of the first signal using the second antenna and output the first signal through the third antenna; and
if the output power of the first signal is smaller than the first reference value, output the first signal through the second antenna and the third antenna.

5. The electronic device of claim 2,
wherein the first communication module is configured to:
when output of the first signal is started, send a first notification indicating output of the first signal to the processor, and
wherein the memory stores instructions to cause the electronic device to:
identify that the second signal is being received through the second communication module in response to reception of the first notification; and
send a second notification indicating reception of the second signal to the first communication module.

6. The electronic device of claim 5,
wherein the memory stores instructions to cause the electronic device to:
send the second notification including information of an antenna to stop transmission of the first signal according to reception of the second signal among the plurality of antennas to the first communication module.

7. The electronic device of claim 1,
wherein the memory stores a table which maps at least one antenna used for transmission of the first signal and at least one antenna used for reception of the second signal corresponding to the state of the electronic device.

8. The electronic device of claim 1,
wherein the plurality of antennas comprises a fourth antenna and a fifth antenna disposed on the first housing, and a sixth antenna disposed on the second housing,
wherein the first signal is transmittable through the fourth antenna and the second signal is receivable through the fifth antenna and the sixth antenna, and
wherein the memory stores instructions to cause the electronic device to:
if the state of the electronic device is the unfolding state,
stop reception of the second signal using the fifth antenna while outputting the first signal through the fourth antenna, and
receive the second signal through the sixth antenna.

9. The electronic device of claim 1,
wherein the memory stores instructions to cause the electronic device to:
if the state of the electronic device is the folding state,
in one period comprising a first time duration and a second time duration,
output the first signal using at least one antenna during at least part of the first time duration, and
receive the second signal using another at least one antenna during at least part of the second time duration.

10. The electronic device of claim 1,
wherein the second signal of the second wireless communication scheme is transmittable and/or receivable in the second frequency band and/or in a third frequency band that does not overlap with the first frequency band and the second frequency band, and
wherein the memory stores instructions to cause the electronic device to:
if the state of the electronic device is the folding state,
stop transmission and reception of the second signal in the second frequency band, and
transmit and receive the second signal through the third frequency band.

11. The electronic device of claim 1,
wherein the memory stores instructions to cause the electronic device to:
if a voice call is being performed through the second wireless communication scheme,
stop transmission of the first signal.

12. A method of controlling transmission and reception paths of wireless signals of an electronic device, comprising:
identifying transmission of a first signal of a first frequency band;
identifying reception of a second signal of a second frequency band at least partially overlapping with the first frequency band, at least partially simultaneously with the transmission of the first signal;
determining a state of the electronic device based on an angle between a first housing and a second housing of the electronic device; and
determining at least one antenna to be used for transmitting the first signal and at least one antenna to be used for receiving the second signal based on the determined state of the electronic device.

13. The method of claim 12,
wherein determining the state of the electronic device comprises:
determining the state of the electronic device as an unfolding state if the angle between the first housing and the second housing is equal to or larger than a first reference angle; and
determining the state of the electronic device as a folding state if the angle between the first housing and the second housing is smaller than a second reference angle, and
wherein determining at least one antenna to be used for transmitting the first signal and at least one antenna to be used for receiving the second signal comprises:
if the state of the electronic device is the unfolding state, outputting the first signal using at least one antenna disposed on the second housing and receiving the second signal using at least one antenna disposed on the first housing.

14. The method of claim 13,
wherein the electronic device comprises a first antenna and a second antenna disposed on the first housing, and a third antenna disposed on the second housing,
wherein the first signal is transmittable through the second antenna and the third antenna and the second signal is receivable through the first antenna, and
wherein determining at least one antenna comprises:
if the state of the electronic device is the unfolding state, stopping transmission of the first signal using the second antenna while receiving the second signal through the first antenna, and outputting the first signal through the third antenna.

15. The method of claim 12,
wherein the electronic device stores a table which maps at least one antenna used for transmission of the first signal and at least one antenna used for reception of the second signal corresponding to the state of the electronic device.
